# EUROPEAN PATENT SPECIFICATION

(11) **EP 3 421 442 B1**
(45) Date of publication and mention of the grant of the patent: **05.08.2020**
(21) Application number: 18178740.9
(22) Date of filing: 20.06.2018
(51) Int. Cl.: C04B 24/24, C04B 24/16, C08G 65/32, C04B 103/40

(54) **DISPERSANT FOR INORGANIC PARTICLES**
DISPERGIERMITTEL FÜR ANORGANISCHE PARTIKEL
DISPERSANT POUR PARTICULES INORGANIQUES

(30) Priority: 28.06.2017 EP 17178382
(43) Date of publication of application: 02.01.2019
(73) Proprietor: Construction Research & Technology GmbH, 83308 Trostberg (DE)
(72) Inventor: Hillesheim, Nina Susanne, 8966 Oberwil-Lieli (CH); Holcombe, Thomas Wesley, 67056 Ludwigshafen (DE); Meise, Markus, 67056 Ludwigshafen (DE)
(74) Representative: BASF IP Association

(56) References cited:
- WO-A1-2012/136425
- WO-A2-03/061577
- WO-A2-2007/102911
- FR-A1- 2 696 736
- JP-A- 2011 127 078
- US-A1- 2003 181 579

## Description

The present invention relates to dispersants for inorganic particles, a process of production of the dispersants, building material mixtures comprising the dispersants and the use of the dispersants as a dispersant for inorganic binders.

It is known that admixtures in the form of dispersants are often added to aqueous slurries of pulverulent inorganic or organic substances, such as clays, silicate powders, chalks, carbon blacks, powdered rocks and hydraulic binders, for improving their workability, i.e. kneadability, spreadability, sprayability, pumpability or flowability. Such admixtures are capable of breaking up solid agglomerates, dispersing the particles formed and in this way improving the fluidity. This effect is also utilized in a targeted manner in particular in the preparation of building material mixtures which contain hydraulic binders, such as cement, lime, calcium sulphate hemihydrate (bassanite), anhydrous calcium sulphate (anhydrite), or latent hydraulic binders, such as fly ash, blast furnace slag or pozzolans.

In order to convert these building material mixtures based on said binders into a ready-to-use, workable form, as a rule substantially more mixing water is required than would be necessary for the subsequent hydration and hardening process. The proportion of cavities which are formed in the concrete body by the excess water which subsequently evaporates leads to significantly poorer mechanical strengths and durability.

In order to reduce this excess proportion of water at a predetermined processing consistency and/or to improve the workability at a predetermined water/binder ratio, admixtures which are generally referred to as water reducer compositions, plasticizers or dispersants are used.

In particular, copolymers which are prepared by free radical copolymerization of acid monomers with polyether macromonomers are used in practice as such compositions. Examples for such dispersants, which are also called polycarboxylate ethers (PCEs) are described in EP 0 753 488 A2 (PCEs basing on the monomers (meth)acrylic acid and (meth)acrylic acid poly (alkylene glycol ether) esters and US6777517 B1 (PCEs basing on unsaturated mono- or dicarboxylic acids and alkenyl polyethers).

Also dispersants are known which basically show a structure in which so called anchoring groups are attached to a poly (alkylene glycol) polymer chain able to interact with the surface of cement particles. The anchoring groups are attracted to the surface of hydrating cement particles. Various dispersant chemistries with anchor groups basing on a wide range of anionic radicals, alkoxy silane radical(s) and polyhydroxy radicals (especially sugar residues) are described for example in the patent applications US 2003 0181 579 A1, WO 0104 185 A1, US 6,451,881 B1 and US 6, 492, 461 B1. The dispersants are used in cementitious formulations, like concrete, grouts and mortars. In particular Optima®100 is a commercial dispersant for cementitious compositions obtainable from the company Chryso. It bases essentially on a polyethylene glycol structure with a diphosphonate anchor group and is described in US 5,879,445. Optima®100 provides for rather low viscosities in concrete and mortar applications and the slump retention is usually satisfactory, but the dosage efficiency and in particular the compressive strength development of the concrete made with said admixture may not be satisfactory in many situations at the job site.

The requirements to modern cementitious building materials and in particular concrete are continuously increasing, and so do the requirements to the before mentioned water reducer compositions.
In particular, a good dosage efficiency of the dispersants (which is generally also related to a good economic viability) together with a good slump retention over time and good compressive strength development of the hardened building materials are in the focus. Recently more and more the influence of the plastic viscosity of the concrete is considered as an important property characterizing the workability of concrete (besides the traditional concrete slump test according to DIN 1048-1).
The plastic viscosity is a measure how viscous a concrete is and is decisive for example for the pumpability of a concrete. A low plastic viscosity concrete will on average flow faster compared to a high viscosity concrete. The low viscosity concrete will usually reach better and more quickly all cavities to be filled in, also in heavily reinforced concrete structures. Concrete and generally cementitious compositions with a low plastic viscosity are an estimated and demanded feature by the construction industry.

The water reducer compositions or plasticizers influence crucially the before mentioned properties of concrete. With respect to the polycarboxylate ethers (PCEs) it can be said that on the one side the dosage efficiency and the strength development of these dispersants are usually good or at least satisfactory, also the slump retention property of polycarboxylate ethers can relatively easily be adapted to the requirements at the job site. On the other side it was found in practice that the plastic viscosity of cementitious compositions like concrete or mortar is usually rather high when said polymeric dispersants of the polycarboxylate ether type (PCE) are used. As it was mentioned before there is a desire to lower the plastic viscosity of cementitious compositions, in particular concrete, in order to improve the workability.

The object of the present invention is therefore to provide a dispersant for inorganic particles, in particular for concrete, which eliminates to a great extent the before mentioned disadvantages of the water reducer admixtures of the prior art. In particular, the combination of good dosage efficiency of the dispersant (which is generally also related to a good economic viability), a good slump retention of the fresh cementitious compositions over time, low plastic viscosity of the fresh concrete and good compressive strength development of the hardened building materials is to be achieved. As a solution a new type of dispersant chemistry is proposed.

This object is achieved by a dispersant for inorganic particles, preferably for cementitious compositions, more preferably for concrete and/or mortar, the dispersant being a sulfoxide according to the general formula (Iₛₒₓ) containing at least one sulfinyl radical (S=O)

(Iₛₒₓ) X-(S=O)-Y

or the dispersant being a sulfon according to the general formula (Iₛₒₙ) containing at least one sulfonyl radical (S(=O)₂)

(Iₛₒₙ) X-(S=O)₂-Y,

X in the formula (Iₛₒₓ) or (Iₛₒₙ) is a structural unit comprising at least one poly (alkylene glycol) and Y in the formula (Iₛₒₓ) or (Iₛₒₙ) is a structural unit comprising a secondary amine or a tertiary amine and at least one phosphor containing radical of the general formula (II)

(II) -OPO₃M^{a}M^{b},

M^{a} and M^{b} are the same or different and are independently from each other hydrogen or a cation equivalent.
The object is also achieved by a process of production of the before mentioned dispersant for inorganic particles, by building material mixtures comprising the dispersants and inorganic binders selected from the group of cement, calcium sulphate semihydrate, anhydrite, slag, preferably ground granulated blast furnace slag, fly ash, silica fume, metakaolin, natural pozzolan, calcined oil shale, calcium aluminate cement or calcium sulpho aluminate cement. It is also achieved by the use as a dispersant for the before mentioned inorganic binders.

Inorganic particles in this patent specification comprise preferably cement, calcium sulphate semihydrate, anhydrite, slag, preferably ground granulated blast furnace slag, fly ash, silica fume, metakaolin, natural pozzolan, calcined oil shale, calcium aluminate cement or calcium sulpho aluminate cement.
The dispersant for inorganic particles according to this invention is a sulfoxide according to the general formula (Iₛₒₓ) containing at least one sulfinyl radical (S=O) or the dispersant is a sulfon according to the general formula (Iₛₒₙ) containing at least one sulfonyl radical (S(=O)₂).

The dispersant for inorganic particles is preferably a dispersant for inorganic binders, more preferably for a binder selected from the group of hydraulic binders, latent hydraulic binders or pozzolanic binders, one or more than one of said binders can be present. Most preferably the dispersant for inorganic particles is a dispersant for inorganic binders selected from the group of cement, calcium sulphate semihydrate, anhydrite, slag, preferably ground granulated blast furnace slag, fly ash, silica fume, metakaolin, natural pozzolan, calcined oil shale, calcium aluminate cement or calcium sulpho aluminate cement, wherein in the building mixtures one or more than one of the binders are comprised. Cement, in particular Portland cement, is preferable.

In this patent specification the terms "group, rest, radical" are synonymous and designate a chemical structure, which is attached by a chemical bond, usually by a single bond, to another chemical structure.

The dispersants according to the invention, in particular the structural unit X in the general formula (Iₛₒₓ) or (Iₛₒₙ), comprises at least one poly (alkylene glycol). The function of said poly (alkylene glycol) is to create for a steric repulsion effect between hydrating cement particles to which the dispersant molecules are attached in an aqueous cementitious composition. X in the formula (Iₛₒₓ) or (Iₛₒₙ) is a structural unit comprising at least one poly (alkylene glycol), in the poly (alkylene glycol) preferably the mol percentage of ethylene glycol is higher than 70 mol %, more preferably higher than 80 mol % and most preferably higher than 90 mol %. Most preferably the poly (alkylene glycol) is poly (ethylene glycol). Preferably the molecular weight of the at least one poly (alkylene glycol) is in the range from 700 to 15 000 g/mol, more preferably from 1500 to 10 000 g/mol and most preferably from 3000 to 8000 g/mol. If more than one poly (alkylene glycol) is present, then the sum of the molecular weight of each poly (alkylene glycol) is calculated.

The dispersants according to the invention, in particular the structural unit Y in the general formula (Iₛₒₓ) or (Iₛₒₙ), contain a structural unit comprising a secondary amine or a tertiary amine. In this patent application the term secondary amine is preferably defined as a chemical structure comprising a nitrogen atom to which two carbon atoms are attached by single bonds and one hydrogen atom is attached to the nitrogen. A tertiary amine in this patent application is preferably defined as a chemical structure comprising a nitrogen atom to which three carbon atoms are attached by single bonds.

A tertiary amine comprised in Y in the formula (Iₛₒₓ) or (Iₛₒₙ) is preferable in comparison to a secondary amine.

The dispersants according to the invention contain also structures of the general formula (II) -OPO₃M^{a}M^{b}, in particular in the structural unit Y in the general formula (Iₛₒₓ) or (Iₛₒₙ). It can be said that the phosphate group, or if the case a plurality of phosphate groups, serves as a kind of anchor group to the surface of cement particles. It is deemed that the attraction to the cement particles is of electrostatic nature, considering that the surface of the cement grain in aqueous systems is charged positively and the fact that the phosphate groups are present as anions in an aqueous cementitious composition.
M^{a} and M^{b} in formula (II) -OPO₃M^{a}M^{b} in this patent specification are the same or different and are independently from each other hydrogen or a cation equivalent. The term cation equivalent in this patent specification is preferably defined as any kind of cation (without hydronium ion) with the proviso that the cation is put down in writing without its charge and is divided by the number of its charges. The kind of cation is not especially limited with the exception of the hydronium ion. Preferable are alkali metal cations, (alkyl)ammonium cations, alkanol ammonium cations, ½ earth alkali metal cations, ⅓ Al, transition metal cations with a charge of 2 or 3, preferably ⅓ Fe, ½ Fe or ½ Zn, wherein in formula (II) one type or several types of said species can be present or in other words M^{a} and M^{b} can be the same or different. For example in the case of alkali cations the cation equivalent means just Li, Na or K, because the charge is 1. For earth alkali metal cations with two charges this means for example ½ Mg, ½ Ca, ½ Ba and so on, for triple charged cations like for example Al³⁺ or Fe³⁺ the respective cation equivalent results in ⅓Al or ⅓Fe.

More preferably the radicals M^{a} and M^{b} are selected from the group of H, Li, Na, K, ½ Mg, ½ Ca, ½ Ba, ½ Zn, 1/3 Al, ½ Fe or ⅓ Fe, wherein in formula (II) one type or several types of said species can be present. M^{a} and M^{b} can be the same or different.

Structural details of the dispersants are described more in detail in the following preferred embodiments and in the dependent claims. Also processes for the production of the dispersants are explained in the following text.

The dispersants according to this invention are effective superplasticizers in cementitious applications like for example concrete and mortar. The dosage is usually in the range of 0.2-0.8 weight % in solids content with respect to the weight of cement. The dispersants according to this invention combine the properties of good water reduction, good slump retention, dosage efficiency, good compressive strength development and low viscosity concrete as can be seen from the experimental part.

Preferable are dispersants where X is a radical of the general formula (III)

(III) PAG-(CH₂)₂-

PAG is a structural unit comprising at least one poly (alkylene glycol) and
Y is a radical of the general formula (IV)

(IV) -(CH₂)₂-NR¹R²,

at least one of the radicals R¹ or R² comprises at least one phosphor containing radical of the general formula (II)

(II) -OPO₃M^{a}M^{b},

M^{a} and M^{b} are the same or different and are independently from each other hydrogen or a cation equivalent.

Preferably PAG is a structural unit comprising at least one poly (alkylene glycol). In said poly (alkylene glycol) the mol percentage of ethylene glycol is preferably higher than 70 mol %, more preferably higher than 80 mol % and most preferably higher than 90 mol %. Most preferably the poly(alkylene glycol) is poly (ethylene glycol). Preferably the molecular weight of the at least one poly (alkylene glycol) is in the range from 700 to 15 000 g/mol, more preferably from 1500 to 10 000 g/mol and most preferably from 3000 to 8000 g/mol. If more than one poly (alkylene glycol) is present, then the sum of the molecular weight is calculated.

R¹ and R² in the general formula (IV) are preferably independently from each other selected from the group of -(CH₂)₂-OPO₃M^{a}M^{b}, -(CH₂)₂-(OA³)ₘ-OPO₃M^{a}M^{b}, -(CH₂)₂-O-CH₂-CH(OPO₃M^{a}M^{b})-CH₂-OPO₃M^{a}M^{b}, -H or an (hetero)aromatic or aliphatic hydrocarbon, A³ is an alkylene group, preferably an alkylene group with a number of carbon atoms from 2 to 20, m is an integer from 1 to 50, preferably 1 to 20, most preferably 1 to 5, M^{a} and M^{b} are the same or different and are independently from each other hydrogen or a cation equivalent. Preferably more than 70 mol % of A³ is ethylene. Preferably the nitrogen in the general formula (IV) is a tertiary nitrogen.
Preferably at least one of R¹ or R² comprises 1 phosphor containing radical of the general formula (II), more preferably R¹ and R² comprise both at least one phosphor containing radical of the general formula (II), more preferably R¹ and R² comprise both 1 phosphor containing radical of the general formula (II).
R¹ and R² are preferably not -OPO₃M^{a}M^{b}.

It is preferable that if Y in the formula (Iₛₒₓ) or (Iₛₒₙ) is a structural unit comprising a secondary amine, one of R¹ or R² in the general formula (IV) is H and that one of R¹ or R² is selected from the group of -(CH₂)₂-OPO₃M^{a}M^{b}, -(CH₂)₂-(OA³)ₘ-OPO₃M^{a}M^{b} or-(CH₂)₂-O-CH₂-CH(OPO₃M^{a}M^{b})-CH₂-OPO₃M^{a}M^{b}. M^{a} and M^{b}, A³, and m have the same meaning as mentioned in the before standing text.

PAG is preferably according to the general formula (V).

(V) R³-O-(AO)ₙ-

R³ is H, -CH₂-CH(OPO₃M^{a}M^{b})-CH₂-OPO₃M^{a}M^{b} oran (hetero)aromatic or aliphatic hydrocarbon, preferably R³ is an (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably 1 to 10 carbon atoms, most preferably 1 to 4 carbon atoms,
A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene,
n is an integer from 2 to 200, preferably 10 to 150, more preferably 20 to 100, more preferably 20 to 75, more preferably 20 to 30 and most preferably 20 to 25, M^{a} and M^{b} are the same or different and are independently from each other hydrogen or a cation equivalent.

PAG is preferably a branched poly (alkylene glycol) of the general formula Lₖ₊₁Vₖ-O-, where
- V: is a branched structural unit of the formula -CH(CH₂O-)₂, and
- L: is a linear structural unit of the formula -[A¹O]ₗ-A², where
- A¹: in each case independently is selected from C₂-C₁₀ alkylene, C₆-C₁₀ arylene and/or C₇-C₁₀ aralkylene, preferably -C₂H₄-,
- A²: in each case independently is selected from C₁-C₃₀ alkyl, C₃-C₁₀ cycloalkyl, C₆-C₃₀ aryl and/or C₇-C₃₀ aralkyl, preferably C₁-C₄ alkyl,
- k: is an integer from 1 to 7, preferably from 1 to 3, and
- I: in each case independently is an integer from 1 to 350, preferably from 2 to 100, more particularly from 5 to 70 and very preferably from 7 to 17.

Preferably more than 70 mol % of A¹ is ethylene, more preferably more than 80 mol % of A¹ is ethylene and most preferably more than 90 mol % of A¹ is ethylene.

Preferably A² is in each case independently selected from C₁-C₄ alkyl, k is preferably an integer from 1 to 3 and preferably I is an integer from 2 to 100.

A branched poly (alkylene glycol) monoalcohol of the general formula Lₖ₊₁Vₖ-OH, which is the precursor of PAG in the form of an alcohol, can be synthesized in analogy to the disclosure of WO 2014/135318 A1. The branched poly (alkylene glycol) monoalcohol of the general formula Lₖ₊₁Vₖ-OH can be reacted with a sulfon or a sulfoxide of the type CH₂=CH-S(=O)_{y}-Y, Y has the before standing meaning, y is 1 or 2. Said reaction is a Michael type addition reaction and a chemical Lₖ₊₁Vₖ-O-CH₂-CH₂-S(=O)_{y}-Y corresponding to PAG-CH₂-CH₂-S(=O)_{y}-Y can be obtained by said addition reaction.
In order to produce the branched poly (alkylene glycol) monoalcohol of the general formula Lₖ₊₁Vₖ-OH, a monoalcohol educt of the formula HO-[A¹O]ₗ-A² is reacted with a glycerol derivative, such as glycidol, glycerol carbonate or epichlorohydrin, preferably with epichlorohydrin. The product is a branched polyether monoalcohol of the general formula Lₖ₊₁Vₖ-OH,
where the parameters V, k, L, A¹, I and A² are defined as stated in the before standing text. It is possible to use the same or different alcohols of the formula HO-[A¹O]ₗ-A².

Said reaction takes place at best in the presence of bases, especially if epichlorohydrin is being used. The reactions can be carried out in the presence of a catalyst. Examples of suitable catalysts include organic and inorganic bases. Where epichlorohydrin is used as the reactive glycerol derivative, the base serves not only as a catalyst but also to neutralize the resultant hydrochloric acid. Examples of suitable inorganic bases include alkali metal carbonates and, in particular alkali metal hydroxides such as NaOH and KOH. Examples of suitable organic bases include tertiary amines, more particularly triethylamine and [2.2.2]diazabicyclooctane (DABCO), and also pyridine and para-N,N-dimethylaminopyridine.

The reaction of glycerol derivatives, such as glycidol or glycerol carbonate, preferably epichlorohydrin, can be carried out in a solvent. Examples of suitable solvents include ethers, especially 1,4-dioxane, diisopropyl ether, tetrahydrofuran ("THF") and di-n-butyl ether. Other suitable solvents are n-butylacetate ("butyl acetate"), DMSO, N,N-dimethylformamide ("DMF") and N-methylpyrrolidone, and aromatic solvents such as toluene, for example.

In embodiments in which water is eliminated during the reaction of the linear monoalcohol of the formula HO-[A¹O]ₗ-A² with a glycerol derivative (e.g. glycerol), it is possible to employ a water-removing agent, as for example a molecular sieve, sodium sulphate or magnesium sulphate, or the water formed may be removed by azeotropic distillation.

These reactions are described in detail in US2011/0015361 A1. Through targeted control of the temperature and of the quantities of monomer, it is possible to obtain different branched polyether monoalcohols, typically in the form of mixtures. Since the reactivity goes down as the number of k (chain length) goes up, it is advantageous to raise the temperature in steps. At relatively low reaction temperatures it is particularly advantageous to react only part of the epichlorohydrin with the monoalcohol of the formula (II), then to add further epichlorohydrin and to continue the reaction at elevated temperature. This sequence, described in US2011/0015361 A1, of substeps (adding epichlorohydrin, raising the temperature, and chemically reacting) can be repeated a number of times.

Generally speaking, these reactions furnish mixtures of branched poly (alkylene glycol) comprising monoalcohols with different values of k, but also with different kinds of constitutions for the same k. Set out below are a number of examples of possible structures.

For the simplest case of k as 1, for example, the following singly branched monoalcohol (MAa) is obtained from the reaction of two equivalents of linear monoalcohol of the formula HO-[A¹O]ₗ-A² with one equivalent of epichlorohydrin:

(MA a) HO-CH[CH₂O-[A¹O]ₗ-A²]₂.

One equivalent of (MA a) may undergo further reaction with one equivalent of epichlorohydrin and one equivalent of a monoalcohol of formula HO-[A¹O]ₗ-A² to the following asymmetric product (MA b) (k = 2):

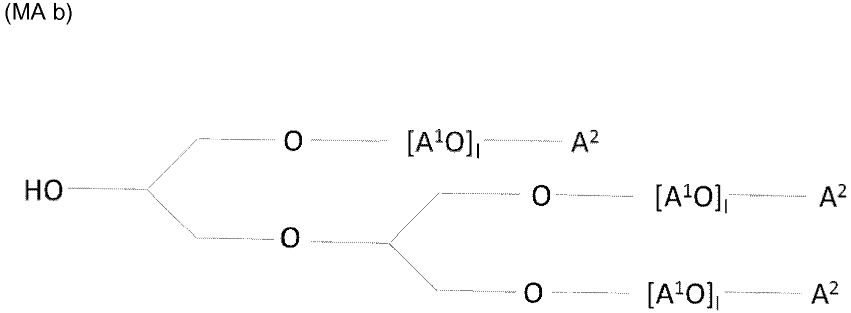

Two equivalents of (MA a) may undergo further reaction, for example, with one equivalent of epichlorohydrin to give the following symmetrical monoalcohol (MA c) (k = 3):

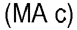

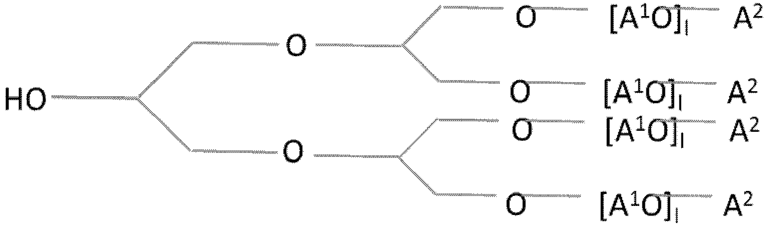

One equivalent of (MA b) may undergo further reaction, for example, with one equivalent of epichlorohydrin and one equivalent of monoalcohol of the formula HO-[A¹O]ₗ-A² to give the following asymmetric monoalcohol (MA d) (k = 3):

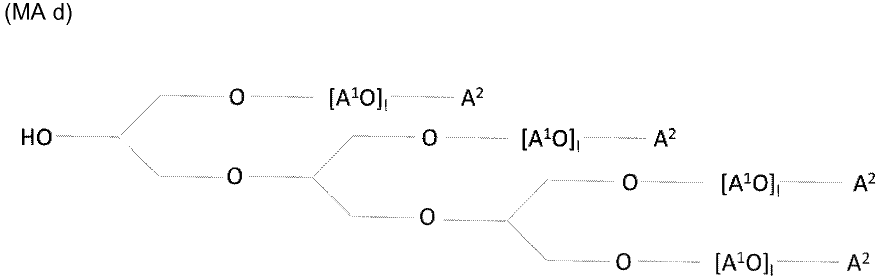

One equivalent of (MA c) may undergo further reaction, for example, with one equivalent of epichlorohydrin and one equivalent of monoalcohol of the formula HO-[A¹O]ₗ-A² to give the following asymmetric monoalcohol (MA e) (k = 4):

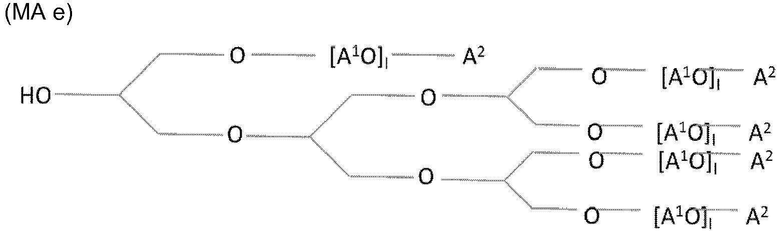

As was explained in the before standing text the branched poly(alkylene glycol) monoalcohols can be used in a Michael type chemical reaction (addition to a vinyl sulfon or a vinly sulfoxide) in order to introduce the branched group Lₖ₊₁Vₖ-O- into the dispersant.

Preferable are dispersants where at least two phosphor containing radicals of the general formula (II) are present

(II) -OPO₃M^{a}M^{b},

M^{a} and M^{b} are the same or different and are independently from each other hydrogen or a cation equivalent. More preferably two phosphor containing radicals of the general formula (II) are present. Two or more anchor groups in the form of phosphate groups enhance the electrostatic attraction to the cement particles, because of the higher negative charge of the dispersant.

Preferred are dispersants, wherein Y in the formula (Iₛₒₓ) or (Iₛₒₙ) is a structural unit comprising a tertiary amine and comprises at least two phosphor containing radicals according to the general formula (II). Preferably the tertiary amine comprises three or four phosphor containing radicals according to the general formula (II).

Preferable are dispersants according to one of the general formulae (Via), (Vlb) or (VIc),

(VIa) R³-O-(AO)ₙ-(CH₂)₂-S(=O)_{y}-(CH₂)₂-N-[-(CH₂)₂-OPO₃M^{a}M^{b}]₂,

(VIb) R³-O-(AO)ₙ-(CH₂)₂-S(=O)_{y}-(CH₂)₂-NH-(CH₂)₂-OPO₃M^{a}M^{b},

(VIc) [R³-O-(AO)ₙ-(CH₂)₂-S(=O)_{y}-(CH₂)₂]₂-N-(CH₂)₂-OPO₃M^{a}M^{b}

R³ is in the formulae (VIa), (VIb) and (VI_{c}) H or an (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom, A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene,
y is in the formulae (VIa), (VIb) and (VIc) 1 or 2,
n is in the formulae (VIa), (VIb) and (VIc) an integer from 2 to 200, preferably 10 to 150, more preferably 20 to 100, more preferably 20 to 75, more preferably 20 to 30 and most preferably 20 to 25,
M^{a} and M^{b} in the formulae (VIa), (VIb) and (VIc) are the same or different and are independently from each other hydrogen or a cation equivalent.

Dispersants according to formula (VIa) are preferable versus (VIb) and (VIc), due to the higher anionic charge in the dispersants.
In the formulae (VIa), (VIb) and (VIc) R³ is preferably a (hetero)aromatic or aliphatic hydrocarbon in comparison to the less preferred H.

Preferred are dispersants according to the general formula (VII)

(VII) R³-O-(AO)ₙ-(CH₂)₂-S(=O)_{y}-(CH₂)₂-N-[(CH₂)₂-O-CH₂-CH(OPO₃M^{a}M^{b})-CH₂-OPO₃M^{a} M^{b}]₂

R³ is in formula (VII) H, -CH₂-CH(OPO₃M^{a}M^{b})-CH₂-OPO₃M^{a}M^{b} oran (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom, A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, y is 1 or 2, n is an integer from 2 to 200, preferably 10 to 150, more preferably 20 to 100, more preferably 20 to 75, more preferably 20 to 30 and most preferably 20 to 25, M^{a} and M^{b} in the formula (VII) are the same or different and are independently from each other hydrogen or a cation equivalent.

Preferable is a dispersant according to general formula (VIIa)

(VIIa) (M^{a}M^{b}O₃PO)-CH₂-CH(OPO₃M^{a}M^{b})-CH₂-O-(AO)ₙ-(CH₂)₂-S(=O)_{y}-(CH₂)₂-N-[(CH₂)₂-O-CH₂-CH(OPO₃M^{a}M^{b})-CH₂-OPO₃M^{a}M^{b}]₂,
y is 1 or 2,
A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, n is an integer from 2 to 200, preferably 10 to 150, more preferably 20 to 100, more preferably 20 to 75, more preferably 20 to 30 and most preferably 20 to 25, M^{a} and M^{b} are the same or different and are independently from each other hydrogen or a cation equivalent.

Preferred are dispersants, wherein n in the formula R³-O-(AO)ₙ is an integer from 10 to 200, more preferably 20 to 150.
The side chain length is important with respect to the dispersibility of the admixtures, because the longer the side chain, the bigger becomes the surface layer for the steric dispersion mechanism between cement particles covered with the dispersants. This effect is not observed for ultralong side chains, since once a certain length is achieved, coiling behavior of the side chains in solution has a negative impact on the adsorption equilibrium and the ultralong side chains become therefore less effective.

The invention relates also to a process for the production of the dispersants.
A first process pattern P1 in which in one step a phosphorylated primary and/or secondary alkanolamine is added in a Michael type addition to a poly (alkylene glycol) comprising vinyl sulfoxide or a poly (alkylene glycol) comprising vinyl sulfon is to be differentiated from a second process pattern P2 in which in two steps first a primary and/or secondary alkanolamine is used in the before mentioned Michael addition and then in the second step a phosphorylation of the hydroxyl groups of the alkanolamine is done. Preferably the phosphorylation of the hydroxyl groups of alkanolamines or other alcohols in the process pattern P1 or P2 is done by any known method of phosphorylation, like for example a reaction of the respective hydroxyl group with phosphoric acid, P₂O₅, polyphosphoric acid, pyrophosphoric acid (disphosphoric acid). It is also possible to use mixtures of said reagents. More preferable is polyphosphoric acid.

The invention relates also to a process for the production of the dispersants, wherein in a process (P1) the following process steps are done:
P1-1) a sulfoxide or a sulfon of the general formula (VIII)

   (VIII) X-S(=O)_{y}-CH=CH₂

   X is a structural unit comprising at least one poly (alkylene glycol), X is preferably R³-O-(AO)ₙ-CH₂-CH₂-,
   R³ is H, -CH₂-CH(OPO₃M^{a}M^{b})-CH₂-OPO₃M^{a}M^{b} oran (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom,
   A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, n is an integer from 2 to 200, preferably 10 to 150, more preferably 20 to 100, more preferably 20 to 75, more preferably 20 to 30 and most preferably 20 to 25, M^{a} and M^{b} are the same or different and are independently from each other hydrogen or a cation equivalent,
   y is 1 or 2,
   is reacted with a phosphorylated primary and/or a phosphorylated secondary alkanolamine,
   or, wherein in an alternative process (P2) the following process steps are done:
P2-1) a sulfoxide or a sulfon of the before standing general formula (VIII) is reacted with a primary alkanolamine and/or a secondary alkanolamine to an alcohol of the following general structure (X)

   (X) X-S(=O)_{y}-(CH₂)₂-NR*¹R*²,

   y is 1 or 2,
   X is a structural unit comprising at least one poly (alkylene glycol), X is preferably R³-O-(AO)ₙ-CH₂-CH₂-,
   R³ is H, -CH₂-CH(OPO₃M^{a}M^{b})-CH₂-OPO₃M^{a}M^{b} oran (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom,
   A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, n is an integer from 2 to 200, preferably 10 to 150, more preferably 20 to 100, more preferably 20 to 75, more preferably 20 to 30 and most preferably 20 to 25, M^{a} and M^{b} are the same or different and are independently from each other hydrogen or a cation equivalent, at least one of the radicals R*¹ or R*² comprises at least one OH group (hydroxy group), preferably at least one of the radicals R*¹ or R*² is selected from the group of -(CH₂)₂-OH, -(CH₂)₂-(OA³)ₘ-OH, H, (hetero)aromatic hydrocarbon or aliphatic hydrocarbon, more preferably at least one of the radicals R*¹ or R*² is -(CH₂)₂-OH,
   A³ is an alkylene group, preferably an alkylene group with a number of carbon atoms from 2 to 20, preferably more than 70 mol % of A³ is ethylene, m is an integer from 1 to 50, preferably 1 to 20, most preferably 1 to 5,
P2-2) optionally the obtained alcohol according to general formula (X) is reacted with 2,3-epoxy-1-propanol (glycidol) to an alcohol of the following general formula (XI)

   (XI) X-S(=O)_{y}-(CH₂)₂-NR**¹R**²

   y is 1 or 2,
   X is a structural unit comprising at least one poly (alkylene glycol), X is preferably R³-O-(AO)ₙ-CH₂-CH₂-,
   R³ is -CH₂-CH(OH)-CH₂-OH, -CH₂-CH(OPO₃M^{a}M^{b})-CH₂-OPO₃M^{a}M^{b} oran (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom,
   A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, n is an integer from 2 to 200, preferably 10 to 150, more preferably 20 to 100, more preferably 20 to 75, more preferably 20 to 30 and most preferably 20 to 25, M^{a} and M^{b} are the same or different and are independently from each other hydrogen or a cation equivalent,
   at least one of the radicals R**¹ or R**² comprises at least one -OCH₂-CH(OH)-CH₂-OH, preferably at least one of the radicals R^{**1} or R**² is selected from the group of-(CH₂)₂-OCH₂-CH(OH)-CH₂-OH, -(CH₂)₂-(OA³)ₘ-OCH₂-CH(OH)-CH₂-OH, -(CH₂)₂-OH,-(CH₂)₂-(OA³)ₘ-OH, H, (hetero)aromatic hydrocarbon or aliphatic hydrocarbon, more preferably at least one of the radicals R^{**1} or R**² is -(CH₂)₂-O-CH₂-CH(OH)-CH₂-OH, most preferably both R^{**1} and R**² are -(CH₂)₂-O-CH₂-CH(OH)-CH₂-OH,
   A³ is an alkylene group, preferably an alkylene group with a number of carbon atoms from 2 to 20, preferably more than 70 mol % of A³ is ethylene, m is an integer from 1 to 50, preferably 1 to 20, most preferably 1 to 5,
P2-3) the obtained alcohol of step P2-1) according to general formula (X) or the obtained alcohol of optional step P2-2) according to general formula (XI) is phosphorylated.

Chemicals according to general formula (VIII) X-S(=O)_{y}-CH=CH₂ can be made by, for example a Michael type addition reaction between divinyl sulfon or divinyl sulfoxide and a polyalkylene glycol comprising alcohol, for example poly (alkylene glycol), poly (ethylene glycol), alkyl poly (alkylene glycol). Instead of the polyalkylene glycol comprising alcohol (the alcohol being a hydroxyl function(OH)), it is also possible to use other polyalkylene glycol comprising nucleophilic chemicals, which are suitable for the Michael addition reaction, like for example polyalkylene glycol comprising thioalcohols or polyalkylene glycol comprising amines or mixtures of said reagents.
The production of such chemicals of the general formula (VIII) is for example described in the literature in Morpurgo, M., Veronese, F. M., Kachensky, D., and Harris, J. M., (1996) Preparation and Characterization of Poly(ethylene glycol) Vinyl Sulfone. Bioconjugate Chem., 7, 363-368*.* The described sulfones can be easily oxidized to the respective sulfoxides by for example hydrogen peroxide or other suitable oxidizing agents.

As an alternative it is possible to alkoxylate, preferably ethoxylate, vinyl mercaptoethanol, for example in accordance to the teaching of DE 2058120 in a first step. In a second step the obtained vinyl thioether alcohol is oxidized with for example hydrogen peroxide to sulfoxides (y = 1) according to the general formula (VIII). In a third step the sulfoxides can be further oxidized to a sulfon (y = 2) according to the general formula (VIII). Such an oxidation from the sulfoxide to the sulfon is described for example in WO 01/62719 A1.

The addition of phosphorylated alkanolamines in process pattern P1 and also the addition of alkanolamines in process pattern P2 to in each case α,β unsaturated vinyl sulfoxides or α,β unsaturated vinyl sulfons of the general formula (VIII) is a Michael type addition in which the nucleophilic amine is added to the vinyl group, which is in neighborhood to the electron withdrawing sulfoxide or sulfon group.

It is also possible to start from divinyl sulfon or divinyl sulfoxide and do first the Michael type addition of a phosphorylated primary and/or secondary alkanolamine (process pattern P1), followed by the Michael addition of the polyalkylene glycol comprising nucleophilic chemical, preferably the polyalkylene glycol comprising alcohol.

In an analogous process according to the process pattern P2 it is again started from divinyl sulfon or divinyl sulfoxide and first the Michael type addition of a primary and/or secondary alkanolamine is done, followed by the Michael addition of the polyalkylene glycol comprising nucleophilic chemical, preferably the polyalkylene glycol comprising alcohol. In a last step a phosphorylation is done. The sequence of the last two steps can be changed so that after the addition of the primary and/or secondary alkanolamine to the divinyl sulfon or divinyl sulfoxide first the phosphorylation step and then the Michael addition of the polyalkylene glycol comprising nucleophilic chemical, preferably the polyalkylene glycol comprising alcohol, is done.

The term "phosphorylated alkanolamine" in this patent specification has preferably the meaning of an amine comprising at least one phosphate group, preferably the ester of an alcohol with phosphoric acid. More preferably the term "phosphorylated alkanolamine" means an amine comprising at least one phosphor containing radical of the general formula (II), most preferably the term "phosphorylated amine" means an amine comprising two phosphor containing radicals of the general formula (II)

(II) -OPO₃M^{a}M^{b},

M^{a} and M^{b} have the before standing meaning.

The phosphorylated alkanolamines are accessible by a phosphorylation of the hydroxyl groups of the respective alkanolamines.

Preferable is a process, wherein in process P1 the phosphorylated primary alkanolamine and/or phosphorylated secondary alkanolamine is selected from the group of ethanol amine phosphate, diethanolamine disphosphate, diethanolamine monosphosphate or mixtures of said phosphorylated alkanolamines or
in process P2 the primary alkanolamine and/or secondary alkanolamine is selected from ethanol amine and/or diethanolamine.
Preferably diethanolamine disphosphate is used in the process P1 and preferably diethanolamine is used in the process P2.

Preferable is a process P1 for the production of the dispersant according to general formula (VIa),

(VIa) R³-O-(AO)ₙ-(CH₂)₂-S(=O)_{y}-(CH₂)₂-N-[-(CH₂)₂-OPO₃M^{a}M^{b}]₂,

wherein a sulfoxide or a sulfon of the general formula (VIII)

(VIII) X-S(=O)_{y}-CH=CH₂

X in formula (VIII) is R³-O-(AO)ₙ-(CH₂)₂-, y is in the formulae (VIa) and (VIII) 1 or 2,
R³ in the formula (VIa) is H or (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom, A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, n is in the formula (VIa) an integer from 2 to 200, preferably 10 to 150, more preferably 20 to 100, more preferably 20 to 75, more preferably 20 to 30 and most preferably 20 to 25,
M^{a} and M^{b} in the formula (VIa) are the same or different and are independently from each other hydrogen or a cation equivalent,
is reacted with diethanolamine diphosphate.
Preferable is a molar ratio between the reactant according to general formula (VIII) and diethanolamine diphosphate in the range of 1/0.5 to 1/2, more preferably 1/0.8 to 1/1.2, most preferably 1/0.9 to 1/1.1.

It is possible to synthesize the dispersant according to general formula (VIb) and also the dispersant according to general formula (VIc) according to the process pattern P1 in an analogous way as described in detail for the general formula (VIa) in the before standing text, only the chemical diethanolamine diphosphate is replaced by ethanolamine phosphate. Generally, mixtures of the dispersants according to general formulae (VIb) and (VIc) will be obtained, depending on the molar ratio of the reactants. A higher ratio of the reactant according to general formula (VIII) to the reactant ethanolamine phosphate, will result in a lower ratio of the dispersants according to general formula (VIb)/(VIc) and vice versa. Preferable is a molar ratio between the reactant according to general formula (VIII) and ethanolamine phosphate in the range of 1/0.2 to 1/0.8, more preferably 1/0.4 to 1/0.6.

It is possible to use also mixtures of diethanolamine diphosphate and ethanolamine phosphate in various molar ratios, which will yield mixtures of dispersants according to general formulae (VIa), (VIb) and (VIc).

Preferable is a process P2 for the production of a dispersant according to general formula (VII),

(VII) R³-O-(AO)ₙ-(CH₂)₂-S(=O)_{y}-(CH₂)₂-N-[(CH₂)₂-O-CH₂-CH(OPO₃M^{a}M^{b})-CH₂-OPO₃M^{a} M^{b}]₂,

wherein the following process steps are done:
P2-1) a sulfoxide or a sulfon of the general formula (VIII) is reacted with diethanolamine to an alcohol of the following general structure (XII)

   (XII) R³-O-(AO)ₙ-(CH₂)₂-S(=O)_{y}-(CH₂)₂-N-[(CH₂)₂-OH]₂,
P2-2) the obtained alcohol according to general formula (XII) is reacted with 2,3-epoxy-1-propanol (glycidol) to a structure of the following general formula (XIII)

   R³-O-(AO)ₙ-(CH₂)₂-S(=O)_{y}-(CH₂)₂-N-[(CH₂)₂-O-CH₂-CH(OH)-CH₂-OH]₂,
P2-3) the obtained alcohol of step P2-2) is phosphorylated, wherein
   y is 1 or 2,
   A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, n is an integer from 2 to 200, preferably 10 to 150, more preferably 20 to 100, more preferably 20 to 75, more preferably 20 to 30 and most preferably 20 to 25, M^{a} and M^{b} are the same or different and are independently from each other hydrogen or a cation equivalent,
   R³ is H, -CH₂-CH(OPO₃M^{a}M^{b})-CH₂-OPO₃M^{a}M^{b} oran (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom.

Preferable is also a process P2 for the production of the dispersant according to general formula (VIIa),

(VIIa) (M^{a}M^{b}O₃PO)-CH₂-CH(OPO₃M^{a}M^{b})-CH₂-O-(AO)ₙ-(CH₂)₂-S(=O)_{y}-(CH₂)₂-N-[(CH₂)₂-O-CH₂-CH(OPO₃M^{a}M^{b})-CH₂-OPO₃M^{a}M^{b}]₂,
y is 1 or 2,
A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, n is an integer from 2 to 200, preferably 10 to 150, more preferably 20 to 100, more preferably 20 to 75, more preferably 20 to 30 and most preferably 20 to 25, M^{a} and M^{b} are the same or different and are independently from each other hydrogen or a cation equivalent,
wherein the following process steps are done:
a poly (alkylene glycol) with the structure HO-(AO)ₙ-H is reacted with a sulfoxide or sulfon of the formula CH₂=CH-S(=O)_{y}-CH=CH₂ to a sulfoxide or a sulfon of the formula HO-(AO)ₙ-(CH₂)₂-S(=O)_{y}-CH=CH₂,
P2-1) HO-(AO)ₙ-(CH₂)₂-S(=O)_{y}-CH=CH₂ is reacted with diethanolamine to an alcohol of the following general structure (XIIa)

   (XIIa) HO-(AO)ₙ-(CH₂)₂-S(=O)_{y}-(CH₂)₂-N-[(CH₂)₂-OH]₂,
P2-2) the obtained alcohol according to general formula (XIIa) is reacted with 2,3-epoxy-1-propanol (glycidol) to a structure of the following general formula (XIIIa) HO-CH₂-CH(OH)-CH₂-O-(AO)ₙ-(CH₂)₂-S(=O)_{y}-(CH₂)₂-N-[(CH₂)₂-O-CH₂-CH(OH)-CH₂-OH]₂,
P2-3) the obtained alcohol of step P2-2) according to general formula (Xllla) is phosphorylated.

The invention concerns also building material mixtures, comprising the dispersants of this invention and inorganic binders selected from the group of cement, calcium sulphate semihydrate, anhydrite, slag, preferably ground granulated blast furnace slag, fly ash, silica fume, metakaolin, natural pozzolan, calcined oil shale, calcium aluminate cement or calcium sulpho aluminate cement, wherein in the building mixtures one or more than one of the binders are comprised.

The dispersants according to this invention are contained in the building material mixture preferably at a dosage of 0.2 weight % to 0.8 weight % with respect to the weight of cement.

For illustration the term building material mixtures preferably means mixtures in dry or aqueous form and in the hardened or plastic state. Dry building material mixtures could be for example mixtures of said binders, preferably cement and the dispersant (preferably in powder form) according to this invention. Mixtures in aqueous form, usually in the form of slurries, pastes, fresh mortar or fresh concrete are produced by the addition of water to the binder component(s) and the dispersant according to this invention, said mixtures transform then from the plastic to the hardened state.

The invention concerns also the use of the dispersants according to this invention as a rheological additive for inorganic binders selected from the group of cement, calcium sulphate semihydrate, anhydrite, slag, preferably ground granulated blast furnace slag, fly ash, silica fume, metakaolin, natural pozzolan, calcined oil shale, calcium aluminate cement or calcium sulpho aluminate cement, wherein one or more than one of the binders are present.

The invention concerns also the use of the dispersants according to this invention as a dispersant for inorganic binders selected from the group of cement, calcium sulphate semihydrate, anhydrite, slag, preferably ground granulated blast furnace slag, fly ash, silica fume, metakaolin, natural pozzolan, calcined oil shale, calcium aluminate cement or calcium sulpho aluminate cement, wherein one or more than one of the binders are present.

### Examples

### Samples S1 (sulfoxide) and sample S2 (sulfon)

Two samples (sample 1 and sample 2) were produced, which are in accordance with general formula (Via)

(VIa) R³-O-(AO)ₙ-(CH₂)₂-S(=O)_{y}-(CH₂)₂-N-[-(CH₂)₂-OPO₃M^{a}M^{b}]₂,

Sample 1 (S1):
   R³ is H, A = - CH₂-CH₂-, n = 24, y = 1, M^{a} and M^{b} are H
Sample 2 (S2):
   R³ is H, A = - CH₂-CH₂-, n = 24, y = 2, M^{a} and M^{b} are H

### 1. Preparation of educts

### a) Preparation of the educt ethoxylated vinyl sulfoxide

As a suitable raw material an ethoxylated vinyl sulfoxide H-O-(CH₂-CH₂O)ₙ-(CH₂)₂-S(=O)-CH=CH₂(n = 24), which falls under the general formula (VIII)) was synthesized in a two step process.
In a first step vinyl mercapto ethanol (VME) was ethoxylated according to WO 2015/063194 A1 with the respective amount of ethylene oxide (EO). In detail 135.5 g (1.3 mol) of vinylmercaptoethanol and 6.77 g of solid potassium methoxide (KOMe) were mixed and methanol was removed in an autoclave at 70 °C and below 10 mbar for 2 hours. The autoclave was rendered inert with nitrogen and the heating at 70 °C was maintained. 1374.4 g (31.2 mol) of ethylene oxide were metered into the autoclave over 12 hours. The reaction was allowed to stir at temperature until the pressure of the vessel remained constant. Volatile components were then removed at 90 °C and below 10 mbar for 2 hours.
1534.1 g of ethoxylated vinyl mercaptoethanol were obtained. The hydroxyl number was 51.7 mg KOH/g (Theory = 48.4 mg KOH/g).

In the second step oxidation of the resulting ethoxylated vinyl mercaptoethanol (H-O-(CH₂-CH₂O)ₙ-(CH₂)₂-S-CH=CH₂) (n = 24) with hydrogen peroxide to the sulfoxide (oxidation at the mercapto group to the vinyl sulfoxide) was done.
In detail the oxidation was done by dissolving 100 g of the ethoxylation product of step 1 in water (50 g). At room temperature hydrogen peroxide (68,67 g, 50% aq. solution) was added over a period of 1hour. After the addition is completed, the reaction is stirred additionally for 30 minutes before the ethoxylated vinyl sulfoxide- H-O-(CH₂-CH₂O)ₙ-(CH₂)₂-S(=O)-CH=CH₂ (n = 24), was confirmed by ¹H-NMR spectroscopy.

### b) Preparation of the educt ethoxylated vinyl sulfon

The ethoxylation of vinyl mercaptoethanol was described in the before standing chapter a) (product of the first process step). 100 g of said ethoxylated vinyl mercaptoethanol is dissolved in water (50 g) and sodium tungstate (0.5 g) is added. At room temperature hydrogen peroxide (137.34 g, 50% aq. solution) is added over a period of 1 hour. After the addition is completed the reaction is stirred additionally for 30 minutes before the vinyl sulfone is confirmed by ¹H-NMR.

### c) Preparation of the educt diphosphato-diethanolamine

Polyphosphoric acid (478,8 g) is put into a reactor and is covered with a layer of nitrogen gas. Under steady stirring diethanolamine (226,5 g) is added dropwise over a period of two hours, wherein the reaction temperature does not exceed 95 °C. If the case, cooling by an ice bath is necessary in order to keep the temperature below said limit. After finishing the addition of the diethanolamine, the reaction composition is heated to a temperature of 95 °C for a period of 10 hours.

### 2. Preparation of the ethoxylated vinyl sulfoxide S1 and vinyl sulfon S2

The further synthesis route followed the synthesis pattern P1 in which in one step a phosphorylated secondary alkanolamine (diphosphato-diethanolamine) was added in a Michael type addition to the ethoxylated vinyl sulfoxide, respectively the vinyl sulfon, resulting in the dispersants S1 and S2.

In detail diphosphato-diethanolamine (20 g) was dissolved in water (200 g) at room temperature. Then the educt ethoxylated vinyl sulfoxide with 24 EO units (138.6 g), described in chapter a), was added within 20 minutes and then stirred for additional 60 minutes in order to result in the dispersant S1.

In an analogous way the dispersant S2 was produced by dissolving diphosphato-diethanolamine (20 g) in water (200 g) at room temperature. Then the educt ethoxylated vinyl sulfon with 24 EO units (140.0 g), described in chapter b), was added within 20 minutes and then stirred for additional 60 minutes.

### Application tests (mortar)

For testing the dosage efficiency, slump retention, plastic viscosity and compressive strength development of the new dispersants S1 and S2, 1.100 g of the cement CEM I 42,5 R (Bernburg), 1.350 g of standardized sand was used to prepare a mortar for testing. The water to cement ratio was chosen to be 0.47.

### Slump flow

**Table 1: Slump flow results**

| | Slump flow (cm) | | | | | |
|---|---|---|---|---|---|---|
| | Dosage (bwoc) | 4 min | 30 min | 60 min | 90 min | 120 min |
| S1 | 0,27% | 26,6 | 25,9 | 25,2 | 24,5 | 23,9 |
| S2 | 0,27% | 25,9 | 23,1 | 20,8 | 19,2 | 17,6 |
| Optima®100 | 0,38% | 26,2 | 24,5 | 24,2 | 24,3 | 24,9 |
| MVA 2500** | 0,08% | 25,4 | 16,7 | XX | XX | XX |

| | | | | | | |
|---|---|---|---|---|---|---|
| **MVA2500 is a PCE basing on the monomers maleic anhydride, acrylic acid and vinyloxybutyl polyethylene glycol (M_{w} = 5.800 g/mol) | | | | | | |

While the dosage required for a commercial polycaboxylate ether dispersant (MVA2500) to achieve an initial flow according to DIN EN 1015-3 of 26 ± 1 cm is 0.08 % by weight of cement (bwoc) respectively, the dosage for Optima®100 is 0.43 % by weight of cement (bwoc). Using the new dispersants according to this invention, the dosage (0.27 bwoc for both S1 and S2) is considerably lower compared to Optima®100, but the dosage is still higher compared to a polycarboxylate ether (PCE). The before mentioned dosages are in each case calculated basing on the dry mass of the dispersants in order to ensure comparability of the data.

### Slump retention

Please see also table 1 for the slump retention results in concrete. The data show that both Optima®100 as well as the dispersants S1 and S2 according to this invention are able to keep the flow of the concrete very well stable over a period of up to 120 minutes, whereas the flow of the polycarboxylate is no more measurable after 60 minutes (stiff concrete).

### Plastic viscosity (J cone test according to EN-445)

**Table 2: J cone test results**

| | Time [sec] | | | | | |
|---|---|---|---|---|---|---|
| | Dosage (bwoc) | 8 min | 33 min | 63 min | 93 min | 123 min |
| S1 | 0,27% | 4,6 | 5,8 | 6,5 | 6,9 | 7,6 |
| S2 | 0,27 | 6,9 | 8,7 | 10,1 | 11,5 | 13 |
| Optima®100 | 0,38 | 4,8 | 5,8 | 6,2 | 6,5 | 6,8 |
| MVA2500 | 0,08%* | 9,23 | XX | XX | XX | XX |

To show the effect of the dispersants on the viscosity of cementitious compositions, the flow time in the J cone experiment was measured. Whereas under these specific test conditions the polycarboxylate ether (PCE) is not able to flow after more than 33 minutes after mixing, Optima®100 and the new dispersant (at a lower dosage of the dispersants according to this invention compared to Optima®100) have a flow time of less than 8 seconds, even still after about two hours after mixing in the case of S1 and still 13 seconds for S2, whereas for the PCE the values are no more measurable after 33 minutes. These rather short J cone times prove that the plastic viscosity is very low and a good workability of the cementitious composition is preserved even up to two hours after the mixing of the cementitious composition.

### Compressive strength development (one day)

**Table 3: compressive strength development (one day)**

| | Dosage (bwoc) | Flexural strength (1d) | Compr. Strength (1d) |
|---|---|---|---|
| S1 | 0,27 % | 5,2 | 21,5 |
| S2 | 0,27% | 5,3 | 23,5 |
| Optima®100 | 0,38 % | 1,2 | 3,8 |
| MVA 2500 | 0,08 % | 5,5 | 24,8 |

The strength development data (both flexural strength as well as compressive strength) of the cementitious mixtures is quite strongly affected by the use of Optima®100 in comparison to a classical polycarboxylate ether (PCE) and also the dispersants according to this invention. The dispersants according to this invention do not show a negative influence on the strength development after 1 day, the obtained strength is comparable to a PCE or only slightly reduced compared to the PCE in the experiment.

As a summary, it could be proven that the new dispersants according to this invention (in the form of a sulfoxide (e.g. S1) as well in the form of a sulfon (e.g. S2) provide a very good slump retention to cementitious compositions even up to at least 120 minutes after mixing and reduce efficiently the plastic viscosity (similar to Optima®100), even over a long period of time up to 120 minutes after mixing. It is pointed particularly out that the dispersants according to this invention do not have a negative effect on the strength development. The dosage efficiency is slightly influenced compared to polycarboxylate ethers, but it is better compared to Optima®100.

## Claims

1. Dispersant for inorganic particles, the dispersant being a sulfoxide according to the general formula (Iₛₒₓ) containing at least one sulfinyl radical (S=O)
(Iₛₒₓ) X-(S=O)-Y
or the dispersant being a sulfon according to the general formula (Iₛₒₙ) containing at least one sulfonyl radical (S(=O)₂)
(Iₛₒₙ) X-(S=O)₂-Y,
X in the formula (Iₛₒₓ) or (Iₛₒₙ) is a structural unit comprising at least one poly (alkylene glycol) and
Y in the formula (Iₛₒₓ) or (Iₛₒₙ) is a structural unit comprising a secondary amine or a tertiary amine and at least one phosphor containing radical of the general formula (II)
(II) -OPO₃M^{a}M^{b},
M^{a} and M^{b} are the same or different and are independently from each other hydrogen or a cation equivalent.

2. Dispersant according to claim 1, wherein
X is a radical of the general formula (III)
(III) PAG-(CH₂)₂-
PAG is a structural unit comprising at least one poly (alkylene glycol) and
Y is a radical of the general formula (IV)
(IV) -(CH₂)₂-NR¹R²
at least one of the radicals R¹ or R² comprises at least one phosphor containing radical of the general formula (II)
(II) -OPO₃M^{a}M^{b},
M^{a} and M^{b} are the same or different and are independently from each other hydrogen or a cation equivalent.

3. Dispersant according to claim 2, wherein PAG is according to the general formula (V)
(V) R³-O-(AO)ₙ-
R³ is H, -CH₂-CH(OPO₃M^{a}M^{b})-CH₂-OPO₃M^{a}M^{b} oran (hetero)aromatic or aliphatic hydrocarbon, preferably R³ is an (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably 1 to 10 carbon atoms, most preferably 1 to 4 carbon atoms,
A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene,
n is an integer from 2 to 200, preferably 10 to 150, more preferably 20 to 100, more preferably 20 to 75, more preferably 20 to 30 and most preferably 20 to 25, M^{a} and M^{b} are the same or different and are independently from each other hydrogen or a cation equivalent.

4. Dispersant according to any of claims 1 to 3, wherein at least two phosphor containing radicals of the general formula (II) are present
(II) -OPO₃M^{a}M^{b},
M^{a} and M^{b} are the same or different and are independently from each other hydrogen or a cation equivalent, more preferably two phosphor containing radicals of the general formula (II) are present.

5. Dispersant according to any of claims 1 to 4, wherein Y in the formula (Iₛₒₓ) or (Iₛₒₙ) is a structural unit comprising a tertiary amine and comprises at least 2 phosphor containing radicals according to the general formula (II), preferably the tertiary amine comprises 3 or 4 phosphor containing radicals according to the general formula (II).

6. Dispersant according to any of claims 1 to 3, wherein the dispersant is according to one of the general formulae (VIa), (VIb) or (VIc),
(VIa) R³-O-(AO)ₙ-(CH₂)₂-S(=O)_{y}-(CH₂)₂-N-[-(CH₂)₂-OPO₃M^{a}M^{b}]₂,
(VIb) R³-O-(AO)ₙ-(CH₂)₂-S(=O)_{y}-(CH₂)₂-NH-(CH₂)₂-OPO₃M^{a}M^{b},
(VIc) [R³-O-(AO)ₙ-(CH₂)₂-S(=O)_{y}-(CH₂)₂]₂-N-(CH₂)₂-OPO₃M^{a}M^{b}
R³ is in the formulae (VIa), (VIb) and (VIc) H or an (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom, A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene,
y is in the formulae (VIa), (VIb) and (VIc) 1 or 2,
n is in the formulae (VIa), (VIb) and (VIc) an integer from 2 to 200, preferably 10 to 150, more preferably 20 to 100, more preferably 20 to 75, more preferably 20 to 30 and most preferably 20 to 25,
M^{a} and M^{b} in the formulae (VIa), (VIb) and (VIc) are the same or different and are independently from each other hydrogen or a cation equivalent.

7. Dispersant according to any of claims 1 to 5, wherein the dispersant is according to the general formula (VII)
(VII) R³-O-(AO)ₙ-(CH₂)₂-S(=O)_{y}-(CH₂)₂-N-[(CH₂)₂-O-CH₂-CH(OPO₃M^{a}M^{b})-CH₂-OPO₃M^{a}M^{b}]₂
R³ is in formula (VII) H, -CH₂-CH(OPO₃M^{a}M^{b})-CH₂-OPO₃M^{a}M^{b} oran (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom, A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, y is 1 or 2, n is an integer from 2 to 200, preferably 10 to 150, more preferably 20 to 100, more preferably 20 to 75, more preferably 20 to 30 and most preferably 20 to 25, M^{a} and M^{b} in the formula (VII) are the same or different and are independently from each other hydrogen or a cation equivalent.

8. Dispersant according to claim 3 or according to claim 6 or 7, wherein n in the formula R³-O-(AO)ₙ is an integer from 10 to 200, more preferably 20 to 150.

9. Process for the production of the dispersant according to any of claims 1 to 8, wherein in a process (P1) the following process steps are done:
P1-1) a sulfoxide or a sulfon of the general formula (VIII)
(VIII) X-S(=O)_{y}-CH=CH₂
X is a structural unit comprising at least one poly (alkylene glycol), X is preferably R³-O-(AO)ₙ-CH₂-CH₂-,
R³ is H, -CH₂-CH(OPO₃M^{a}M^{b})-CH₂-OPO₃M^{a}M^{b} oran (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom,
A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, n is an integer from 2 to 200, preferably 10 to 150, more preferably 20 to 100, more preferably 20 to 75, more preferably 20 to 30 and most preferably 20 to 25, M^{a} and M^{b} are the same or different and are independently from each other hydrogen or a cation equivalent,
y is 1 or 2,
is reacted with a phosphorylated primary and/or a phosphorylated secondary alkanolamine,
or, wherein in an alternative process (P2) the following process steps are done:
P2-1) a sulfoxide or a sulfon of the before standing general formula (VIII) is reacted with a primary alkanolamine and/or a secondary alkanolamine to an alcohol of the following general structure (X)
(X) X-S(=O)_{y}-(CH₂)₂-NR*¹R*²,
y is 1 or 2,
X is a structural unit comprising at least one poly (alkylene glycol), X is preferably R³-O-(AO)ₙ-CH₂-CH₂-,
R³ is H, -CH₂-CH(OPO₃M^{a}M^{b})-CH₂-OPO₃M^{a}M^{b} oran (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom,
A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, n is an integer from 2 to 200, preferably 10 to 150, more preferably 20 to 100, more preferably 20 to 75, more preferably 20 to 30 and most preferably 20 to 25, M^{a} and M^{b} are the same or different and are independently from each other hydrogen or a cation equivalent, at least one of the radicals R*¹ or R*² comprises at least one OH group (hydroxy group), preferably at least one of the radicals R*¹ or R*² is selected from the group of -(CH₂)₂-OH, -(CH₂)₂-(OA³)ₘ-OH, H, (hetero)aromatic hydrocarbon or aliphatic hydrocarbon,
more preferably at least one of the radicals R*¹ or R*² is -(CH₂)₂-OH,
A³ is an alkylene group, preferably an alkylene group with a number of carbon atoms from 2 to 20, preferably more than 70 mol % of A³ is ethylene, m is an integer from 1 to 50, preferably 1 to 20, most preferably 1 to 5,
P2-2) optionally the obtained alcohol according to general formula (X) is reacted with 2,3-epoxy-1-propanol (glycidol) to an alcohol of the following general formula (XI)
(XI) X-S(=O)_{y}-(CH₂)₂-NR**¹R**²
y is 1 or 2,
X is a structural unit comprising at least one poly (alkylene glycol), X is preferably R³-O-(AO)ₙ-CH₂-CH₂-,
R³ is -CH₂-CH(OH)-CH₂-OH, -CH₂-CH(OPO₃M^{a}M^{b})-CH₂-OPO₃M^{a}M^{b} oran (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom,
A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, n is an integer from 2 to 200, preferably 10 to 150, more preferably 20 to 100, more preferably 20 to 75, more preferably 20 to 30 and most preferably 20 to 25, M^{a} and M^{b} are the same or different and are independently from each other hydrogen or a cation equivalent, at least one of the radicals R**¹ or R**² comprises at least one -OCH₂-CH(OH)-CH₂-OH, preferably at least one of the radicals R**¹ or R**² is selected from the group of -(CH₂)₂-OCH₂-CH(OH)-CH₂-OH, -(CH₂)₂-(OA³)ₘ-OCH₂-CH(OH)-CH₂-OH, -(CH₂)₂-OH, -(CH₂)₂-(OA³)ₘ-OH, H, (hetero)aromatic hydrocarbon or aliphatic hydrocarbon, more preferably at least one of the radicals R**¹ or R**² is -(CH₂)₂-O-CH₂-CH(OH)-CH₂-OH, most preferably both R**¹ and R**² are -(CH₂)₂-O-CH₂-CH(OH)-CH₂-OH,
A³ is an alkylene group, preferably an alkylene group with a number of carbon atoms from 2 to 20, preferably more than 70 mol % of A³ is ethylene, m is an integer from 1 to 50, preferably 1 to 20, most preferably 1 to 5,
P2-3) the obtained alcohol of step P2-1) according to general formula (X) or the obtained alcohol of optional step P2-2) according to general formula (XI) is phosphorylated.

10. Process according to claim 9 for the production of the dispersant according to any of claims 1 to 8, wherein in process P1
the phosphorylated primary alkanolamine and/or phosphorylated secondary alkanolamine is selected from the group of ethanol amine phosphate, diethanolamine disphosphate, diethanolamine monosphosphate or mixtures of said phosphorylated alkanolamines or
in process P2
the primary alkanolamine and/or secondary alkanolamine is selected from ethanol amine and/or diethanolamine.

11. Process P1 according to claim 9 or claim 10 for the production of the dispersant in accordance with claim 6, general formula (VIa),
(VIa) R³-O-(AO)ₙ-(CH₂)₂-S(=O)_{y}-(CH₂)₂-N-[-(CH₂)₂-OPO₃M^{a}M^{b}]₂,
wherein a sulfoxide or a sulfon of the general formula (VIII)
(VIII) X-S(=O)_{y}-CH=CH₂
X in formula (VIII) is R³-O-(AO)ₙ-(CH₂)₂-, y is in the formulae (VIa) and (VIII) 1 or 2, R³ in the formula (VIa) is H or (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom, A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, n is in the formula (VIa) an integer from 2 to 200, preferably 10 to 150, more preferably 20 to 100, more preferably 20 to 75, more preferably 20 to 30 and most preferably 20 to 25,
M^{a} and M^{b} in the formula (VIa) are the same or different and are independently from each other hydrogen or a cation equivalent,
is reacted with diethanolamine diphosphate.

12. Process P2 according to claim 9 for the production of the dispersant according to general formula (VII),
(VII) R³-O-(AO)ₙ-(CH₂)₂-S(=O)_{y}-(CH₂)₂-N-[(CH₂)₂-O-CH₂-CH(OPO₃M^{a}M^{b})-CH₂-OPO₃M^{a}M^{b}]₂,
wherein the following process steps are done:
P2-1) a sulfoxide or a sulfon of the general formula (VIII) is reacted with diethanolamine to an alcohol of the following general structure (XII)
(XII) R³-O-(AO)ₙ-(CH₂)₂-S(=O)_{y}-(CH₂)₂-N-[(CH₂)₂-OH]₂,
P2-2) the obtained alcohol according to general formula (XII) is reacted with 2,3-epoxy-1-propanol (glycidol) to a structure of the following general formula (XIII)
(XIII) R³-O-(AO)ₙ-(CH₂)₂-S(=O)_{y}-(CH₂)₂-N-[(CH₂)₂-O-CH₂-CH(OH)-CH₂-OH]₂,
P2-3) the obtained alcohol of step P2-2) is phosphorylated, wherein
y is 1 or 2,
A is an alkylene group, preferably an alkylene group with a number of carbon atoms from 2 to 20, preferably more than 70 mol % of A is ethylene, more preferably more than 80 mol % of A is ethylene, more preferably more than 90 mol % of A is ethylene and most preferably 100 mol % of A is ethylene, n is an integer from 2 to 200, preferably 10 to 150, more preferably 20 to 100, more preferably 20 to 75, more preferably 20 to 30 and most preferably 20 to 25, M^{a} and M^{b} are the same or different and are independently from each other hydrogen or a cation equivalent, R³ is H, -CH₂-CH(OPO₃M^{a}M^{b})-CH₂-OPO₃M^{a}M^{b} oran (hetero)aromatic or aliphatic hydrocarbon, optionally a substituted (hetero)aromatic or substituted aliphatic hydrocarbon, preferably a saturated hydrocarbon with a number of carbon atoms from 1 to 30, preferably with a number of carbon atoms from 1 to 10, most preferably 1 carbon atom.

13. Building material mixture, comprising the dispersant according to any of claims 1 to 8 and inorganic binders selected from the group of cement, calcium sulphate semihydrate, anhydrite, slag, preferably ground granulated blast furnace slag, fly ash, silica fume, metakaolin, natural pozzolan, calcined oil shale, calcium aluminate cement or calcium sulpho aluminate cement, wherein in the building mixtures one or more than one of the binders are comprised.

14. Use of the dispersants according to any of claims 1 to 8 as a dispersant for inorganic binders selected from the group of cement, calcium sulphate semihydrate, anhydrite, slag, preferably ground granulated blast furnace slag, fly ash, silica fume, metakaolin, natural pozzolan, calcined oil shale, calcium aluminate cement or calcium sulpho aluminate cement, wherein one or more than one of the binders are present.

## Patentansprüche

1. Dispergiermittel für anorganische Partikel, wobei es sich bei dem Dispergiermittel um ein Sulfoxid gemäß der folgenden allgemeinen Formel (Iₛₒₓ), das mindestens einen Sulfinylrest (S=O) enthält, handelt,
(Iₛₒₓ) X-(S=O)-Y
oder wobei es sich bei dem Dispergiermittel um ein Sulfon gemäß der folgenden allgemeinen Formel (Iₛₒₙ), das mindestens einen Sulfonylrest (S(=O)₂) enthält, handelt,
(Iₛₒₙ) X-(S=O)₂-Y,
wobei X in der Formel (Iₛₒₓ) oder (Iₛₒₙ) für eine mindestens ein Poly(alkylenglycol) umfassende Struktureinheit steht und
Y in der Formel (Iₛₒₓ) oder (Iₛₒₙ) für eine Struktureinheit steht, die ein sekundäres oder tertiäres Amin und mindestens einen phosphorhaltigen Rest der folgenden allgemeinen Formel (II) umfasst,
(II) -OPO₃M^{a}M^{b},
wobei M^{a} und M^{b} gleich oder voneinander verschieden sind und unabhängig voneinander jeweils für Wasserstoff oder für ein Kationenäquivalent stehen.

2. Dispergiermittel nach Anspruch 1, wobei
X für einen Rest der folgenden allgemeinen Formel (III) steht,
(III) PAG- (CH₂)₂-,
wobei PAG für eine mindestens ein Poly(alkylenglycol) umfassende Struktureinheit steht und
Y für einen Rest der folgenden allgemeinen Formel (IV) steht,
(IV) -(CH₂)₂-NR¹R²,
wobei mindestens einer der Reste R¹ oder R² mindestens einen phosphorhaltigen Rest der folgenden allgemeinen Formel (II) umfasst,
(II) -OPO₃M^{a}M^{b},
wobei M^{a} und M^{b} gleich oder voneinander verschieden sind und unabhängig voneinander jeweils für Wasserstoff oder für ein Kationenäquivalent stehen.

3. Dispergiermittel nach Anspruch 2, wobei PAG der folgenden allgemeinen Formel (V) entspricht,
(V) R³-O-(AO)ₙ-,
wobei R³ für H, -CH₂-CH(OPO₃M^{a}M^{b})-CH₂-OPO₃M^{a}M^{b} oder einen (hetero)aromatischen oder aliphatischen Kohlenwasserstoff steht, R³ vorzugsweise für einen (hetero)aromatischen oder aliphatischen Kohlenwasserstoff, gegebenenfalls für einen substituierten (hetero)aromatischen oder substituierten aliphatischen Kohlenwasserstoff, vorzugsweise für einen gesättigten Kohlenwasserstoff mit einer Anzahl von 1 bis 30 Kohlenstoffatomen, vorzugsweise 1 bis 10 Kohlenstoffatomen, ganz besonders bevorzugt 1 bis 4 Kohlenstoffatomen, steht, A für eine Alkylengruppe, vorzugsweise eine Alkylengruppe mit einer Anzahl von 2 bis 20 Kohlenstoffatomen, steht, Ethylen vorzugsweise mehr als 70 mol-% von A ausmacht, Ethylen weiter bevorzugt mehr als 80 mol-% von A ausmacht, Ethylen weiter bevorzugt mehr als 90 mol-% von A ausmacht und Ethylen ganz besonders bevorzugt 100 mol-% von A ausmacht,
n für eine ganze Zahl von 2 bis 200, vorzugsweise 10 bis 150, weiter bevorzugt 20 bis 100, weiter bevorzugt 20 bis 75, weiter bevorzugt 20 bis 30 und ganz besonders bevorzugt 20 bis 25 steht,
M^{a} und M^{b} gleich oder voneinander verschieden sind und unabhängig voneinander jeweils für Wasserstoff oder für ein Kationenäquivalent stehen.

4. Dispergiermittel nach einem der Ansprüche 1 bis 3, wobei mindestens zwei phosphorhaltige Reste der folgenden allgemeinen Formel (II) vorliegen,
(II) -OPO₃M^{a}M^{b},
wobei M^{a} und M^{b} gleich oder voneinander verschieden sind und unabhängig voneinander jeweils für Wasserstoff oder für ein Kationenäquivalent stehen, weiter bevorzugt zwei phosphorhaltige Reste der allgemeinen Formel (II) vorliegen.

5. Dispergiermittel nach einem der Ansprüche 1 bis 4, wobei Y in der Formel (Iₛₒₓ) oder (Iₛₒₙ) für eine Struktureinheit steht, die ein tertiäres Amin umfasst und mindestens 2 phosphorhaltige Reste gemäß der allgemeinen Formel (II) umfasst, wobei das tertiäre Amin vorzugsweise 3 oder 4 phosphorhaltige Reste gemäß der allgemeinen Formel (II) umfasst.

6. Dispergiermittel nach einem der Ansprüche 1 bis 3, wobei das Dispergiermittel einer der folgenden allgemeinen Formeln (VIa), (VIb) oder (VIc) entspricht,
(VIa) R³-O-(AO)ₙ-(CH₂)₂-S(=O)_{y}-(CH₂)₂-N-[-(CH₂)₂-OPO₃M^{a}M^{b}]₂,
(VIb) R³-O-(AO)ₙ-(CH₂)₂-S(=O)_{y}-(CH₂)₂-NH-(CH₂)₂-OPO₃M^{a}M^{b},
(VIc) [R³-O-(AO)ₙ-(CH₂)₂-S(=O)_{y}-(CH₂)₂]₂-N-(CH₂)₂-OPO₃M^{a}M^{b},
wobei R³ in den Formeln (VIa), (VIb) und (VIc) für H oder einen (hetero)aromatischen oder aliphatischen Kohlenwasserstoff, gegebenenfalls für einen substituierten (hetero)aromatischen oder substituierten aliphatischen Kohlenwasserstoff, vorzugsweise einen gesättigten Kohlenwasserstoff mit einer Anzahl von 1 bis 30 Kohlenstoffatomen, vorzugsweise mit einer Anzahl von 1 bis 10 Kohlenstoffatomen, ganz besonders bevorzugt 1 Kohlenstoffatom, steht, A für eine Alkylengruppe, vorzugsweise eine Alkylengruppe mit einer Anzahl von 2 bis 20 Kohlenstoffatomen, steht, Ethylen vorzugsweise mehr als 70 mol-% von A ausmacht, Ethylen weiter bevorzugt mehr als 80 mol-% von A ausmacht, Ethylen weiter bevorzugt mehr als 90 mol-% von A ausmacht und Ethylen ganz besonders bevorzugt 100 mol-% von A ausmacht,
y in den Formeln (VIa), (VIb) und (VIc) 1 oder 2 ist,
n in den Formeln (VIa), (VIb) und (VIc) für eine ganze Zahl von 2 bis 200, vorzugsweise 10 bis 150, weiter bevorzugt 20 bis 100, weiter bevorzugt 20 bis 75, weiter bevorzugt 20 bis 30 und ganz besonders bevorzugt 20 bis 25 steht,
wobei M^{a} und M^{b} in den Formeln (VIa), (VIb) und (VIc) gleich oder voneinander verschieden sind und unabhängig voneinander jeweils für Wasserstoff oder für ein Kationenäquivalent stehen.

7. Dispergiermittel nach einem der Ansprüche 1 bis 5, wobei das Dispergiermittel der folgenden allgemeinen Formel (VII) entspricht,
(VII) R³-O-(AO)ₙ-(CH₂)₂-S(=O)_{y}-(CH₂)₂-N-[(CH₂)₂-O-CH₂-CH(OPO₃M^{a}M^{b})-CH₂-OPO₃M^{a}M^{b}]₂,
wobei R³ in der Formel (VII) für H, -CH₂-CH(OPO₃M^{a}M^{b})-CH₂-OPO₃M^{a}M^{b} oder einen (hetero)aromatischen oder aliphatischen Kohlenwasserstoff, gegebenenfalls für einen substituierten (hetero)aromatischen oder substituierten aliphatischen Kohlenwasserstoff, vorzugsweise für einen gesättigten Kohlenwasserstoff mit einer Anzahl von 1 bis 30 Kohlenstoffatomen, vorzugsweise mit einer Anzahl von 1 bis 10 Kohlenstoffatomen, ganz besonders bevorzugt 1 Kohlenstoffatom, steht, A für eine Alkylengruppe, vorzugsweise eine Alkylengruppe mit einer Anzahl von 2 bis 20 Kohlenstoffatomen, steht, Ethylen vorzugsweise mehr als 70 mol-% von A ausmacht, Ethylen weiter bevorzugt mehr als 80 mol-% von A ausmacht, Ethylen weiter bevorzugt mehr als 90 mol-% von A ausmacht und Ethylen ganz besonders bevorzugt 100 mol-% von A ausmacht, n für eine ganze Zahl von 2 bis 200, vorzugsweise 10 bis 150, weiter bevorzugt 20 bis 100, weiter bevorzugt 20 bis 75, weiter bevorzugt 20 bis 30 und ganz besonders bevorzugt 20 bis 25 steht, M^{a} und M^{b} in der Formel (VII) gleich oder voneinander verschieden sind und unabhängig voneinander jeweils für Wasserstoff oder für ein Kationenäquivalent stehen.

8. Dispergiermittel nach Anspruch 3 oder nach Anspruch 6 oder 7, wobei n in der Formel R³-O-(AO)ₙ für eine ganze Zahl von 10 bis 200, weiter bevorzugt 20 bis 150, steht.

9. Verfahren zur Herstellung des Dispergiermittels nach einem der Ansprüche 1 bis 8, wobei bei einem Verfahren (P1) die folgenden Verfahrensschritte durchgeführt werden:
P1-1) ein Sulfoxid oder ein Sulfon der folgenden allgemeinen Formel (VIII),
(VIII) X-S(=O)_{y}-CH=CH₂,
wobei X für eine mindestens ein Poly(alkylenglycol) umfassende Struktureinheit steht und X vorzugsweise für R³-O-(AO)ₙ-CH₂-CH₂- steht,
wobei R³ für H, -CH₂-CH(OPO₃M^{a}M^{b})-CH₂-OPO₃M^{a}M^{b} oder einen (hetero)aromatischen oder aliphatischen Kohlenwasserstoff, gegebenenfalls für einen substituierten (hetero)aromatischen oder substituierten aliphatischen Kohlenwasserstoff, vorzugsweise einen gesättigten Kohlenwasserstoff mit einer Anzahl von 1 bis 30 Kohlenstoffatomen, vorzugsweise einer Anzahl von 1 bis 10 Kohlenstoffatomen, ganz besonders bevorzugt 1 Kohlenstoffatom, steht,
A für eine Alkylengruppe, vorzugsweise eine Alkylengruppe mit einer Anzahl von 2 bis 20 Kohlenstoffatomen, steht, Ethylen vorzugsweise mehr als 70 mol-% von A ausmacht, Ethylen weiter bevorzugt mehr als 80 mol-% von A ausmacht, Ethylen noch weiter bevorzugt mehr als 90 mol-% von A ausmacht und Ethylen ganz besonders bevorzugt 100 mol-% von A ausmacht, n für eine ganze Zahl von 2 bis 200, vorzugsweise 10 bis 150, weiter bevorzugt 20 bis 100, weiter bevorzugt 20 bis 75, weiter bevorzugt 20 bis 30 und ganz besonders bevorzugt 20 bis 25 steht, M^{a} und M^{b} gleich oder voneinander verschieden sind und unabhängig voneinander jeweils für Wasserstoff oder für ein Kationenäquivalent stehen,
y 1 oder 2 ist,
wird mit einem phosphorylierten primären und/oder einem phosphorylierten sekundären Alkanolamin umgesetzt,
oder wobei bei einem alternativen Verfahren (P2) die folgenden Verfahrensschritte durchgeführt werden:
P2-1) ein Sulfoxid oder ein Sulfon der obenstehenden allgemeinen Formel (VIII) wird mit einem primären Alkanolamin und/oder einem sekundären Alkanolamin zu einem Alkohol der folgenden allgemeinen Struktur (X) umgesetzt,
(X) X-S(=O)_{y}-(CH₂)₂-NR*¹R*²,
wobei y 1 oder 2 ist,
X für eine mindestens ein Poly(alkylenglycol) umfassende Struktureinheit steht und X vorzugsweise für R³-O-(AO)ₙ-CH₂-CH₂- steht,
R³ für H, -CH₂-CH(OPO₃M^{a}M^{b})-CH₂-OPO₃M^{a}M^{b} oder einen (hetero)aromatischen oder aliphatischen Kohlenwasserstoff, gegebenenfalls für einen substituierten (hetero)aromatischen oder substituierten aliphatischen Kohlenwasserstoff, vorzugsweise einen gesättigten Kohlenwasserstoff mit einer Anzahl von 1 bis 30 Kohlenstoffatomen, vorzugsweise einer Anzahl von 1 bis 10 Kohlenstoffatomen, ganz besonders bevorzugt 1 Kohlenstoffatom, steht,
A für eine Alkylengruppe, vorzugsweise eine Alkylengruppe mit einer Anzahl von 2 bis 20 Kohlenstoffatomen, steht, Ethylen vorzugsweise mehr als 70 mol-% von A ausmacht, Ethylen weiter bevorzugt mehr als 80 mol-% von A ausmacht, Ethylen noch weiter bevorzugt mehr als 90 mol-% von A ausmacht und Ethylen ganz besonders bevorzugt 100 mol-% von A ausmacht, n für eine ganze Zahl von 2 bis 200, vorzugsweise 10 bis 150, weiter bevorzugt 20 bis 100, weiter bevorzugt 20 bis 75, weiter bevorzugt 20 bis 30 und ganz besonders bevorzugt 20 bis 25 steht, M^{a} und M^{b} gleich oder voneinander verschieden sind und unabhängig voneinander jeweils für Wasserstoff oder für ein Kationenäquivalent stehen, wobei mindestens einer der Reste R*¹ oder R*² mindestens eine OH-Gruppe (Hydroxygruppe) umfasst, wobei mindestens einer der Reste R*¹ oder R*² aus der Gruppe von -(CH₂)₂-OH, -(CH₂)₂-(OA³)ₘ-OH, H, (hetero)aromatischem Kohlenwasserstoff oder aliphatischem Kohlenwasserstoff ausgewählt ist,
weiter bevorzugt mindestens einer der Reste R*¹ oder R*² für -(CH₂)₂-OH steht, A³ für eine Alkylengruppe, vorzugsweise eine Alkylengruppe mit einer Anzahl von 2 bis 20 Kohlenstoffatomen, steht, Ethylen vorzugsweise mehr als 70 mol-% von A³ ausmacht, m für eine ganze Zahl von 1 bis 50, vorzugsweise 1 bis 20, ganz besonders bevorzugt 1 bis 5 steht,
P2-2) der erhaltene Alkohol gemäß der allgemeinen Formel (X) wird gegebenenfalls mit 2,3-Epoxy-1-propanol(glycidol) zu einem Alkohol der folgenden allgemeinen Formel (XI) umgesetzt,
(XI) X-S(=O)_{y}-(CH₂)₂-NR**¹R**²,
wobei y 1 oder 2 ist,
X für eine mindestens ein Poly(alkylenglycol) umfassende Struktureinheit steht, X vorzugsweise für R³-O-(AO)ₙ-CH₂-CH₂- steht,
R³ für -CH₂-CH(OH)-CH₂-OH, -CH₂-CH(OPO₃M^{a}M^{b})-CH₂-OPO₃M^{a}M^{b} oder einen (hetero)aromatischen oder aliphatischen Kohlenwasserstoff, gegebenenfalls für einen substituierten (hetero)aromatischen oder substituierten aliphatischen Kohlenwasserstoff, vorzugsweise einen gesättigten Kohlenwasserstoff mit einer Anzahl von 1 bis 30 Kohlenstoffatomen, vorzugsweise einer Anzahl von 1 bis 10 Kohlenstoffatomen, ganz besonders bevorzugt 1 Kohlenstoffatom, steht,
A für eine Alkylengruppe, vorzugsweise eine Alkylengruppe mit einer Anzahl von 2 bis 20 Kohlenstoffatomen, steht, Ethylen vorzugsweise mehr als 70 mol-% von A ausmacht, Ethylen weiter bevorzugt mehr als 80 mol-% von A ausmacht, Ethylen noch weiter bevorzugt mehr als 90 mol-% von A ausmacht und Ethylen ganz besonders bevorzugt 100 mol-% von A ausmacht, n für eine ganze Zahl von 2 bis 200, vorzugsweise 10 bis 150, weiter bevorzugt 20 bis 100, weiter bevorzugt 20 bis 75, weiter bevorzugt 20 bis 30 und ganz besonders bevorzugt 20 bis 25 steht, M^{a} und M^{b} gleich oder voneinander verschieden sind und unabhängig voneinander jeweils für Wasserstoff oder für ein Kationenäquivalent stehen, wobei mindestens einer der Reste R**¹ oder R**² mindestens eine Teilstruktur -OCH₂-CH(OH)-CH₂-OH umfasst, wobei mindestens einer der Reste R**¹ oder R**² aus der Gruppe von -(CH₂)₂-OCH₂-CH(OH)-CH₂-OH, -(CH₂)₂-(OA³)ₘ-OCH₂-CH(OH)-CH₂-OH, -(CH₂)₂-OH, -(CH₂)₂-(OA³)ₘ-OH, H, (hetero)aromatischem Kohlenwasserstoff oder aliphatischem Kohlenwasserstoff ausgewählt ist, weiter bevorzugt mindestens einer der Reste R**¹ oder R**² für-(CH₂)₂-O-CH₂-CH(OH)-CH₂-OH steht, ganz besonders bevorzugt beide Reste R**¹ oder R**² für -(CH₂)₂-O-CH₂-CH(OH)-CH₂-OH stehen,
A³ für eine Alkylengruppe, vorzugsweise eine Alkylengruppe mit einer Anzahl von 2 bis 20 Kohlenstoffatomen, steht, Ethylen vorzugsweise mehr als 70 mol-% von A³ ausmacht, m für eine ganze Zahl von 1 bis 50, vorzugsweise 1 bis 20, ganz besonders bevorzugt 1 bis 5 steht,
P2-3) der aus Schritt P2-1) erhaltene Alkohol gemäß der allgemeinen Formel (X) oder der aus dem fakultativen Schritt P2-2) erhaltene Alkohol gemäß der allgemeinen Formel (XI) wird phosphoryliert.

10. Verfahren nach Anspruch 9 zur Herstellung des Dispergiermittels nach einem der Ansprüche 1 bis 8, wobei bei dem Verfahren P1
das phosphorylierte primäre Alkanolamin und/oder phosphorylierte sekundäre Alkanolamin aus der Gruppe von Ethanolaminphosphat, Diethanolamindiphosphat, Diethanolaminmonophosphat oder Mischungen dieser phosphorylierten Alkanolamine ausgewählt ist bzw. sind oder
bei dem Verfahren P2
das primäre Alkanolamin und/oder sekundäre Alkanolamin aus Ethanolamin und/oder Diethanolamin ausgewählt ist bzw. sind.

11. Verfahren P1 nach Anspruch 9 oder Anspruch 10 zur Herstellung des Dispergiermittels gemäß der folgenden allgemeinen Formel (VIa) aus Anspruch 6,
(VIa) R³-O-(AO)ₙ-(CH₂)₂-S(=O)_{y}-(CH₂)₂-N-[-(CH₂)₂-OPO₃M^{a}M^{b}]₂,
wobei ein Sulfoxid oder ein Sulfon der folgenden allgemeinen Formel (VIII)
(VIII) X-S(=O)_{y}-CH=CH₂,
wobei X in der Formel (VIII) für R³-O-(AO)ₙ-(CH₂)₂- steht, y in den Formeln (VIa) und (VIII) 1 oder 2 ist, R³ in der Formel (VIa) für H oder (hetero)aromatischen oder aliphatischen Kohlenwasserstoff, gegebenenfalls für einen substituierten (hetero)aromatischen oder substituierten aliphatischen Kohlenwasserstoff, vorzugsweise für einen gesättigten Kohlenwasserstoff mit einer Anzahl von 1 bis 30 Kohlenstoffatomen, vorzugsweise mit einer Anzahl von 1 bis 10 Kohlenstoffatomen, ganz besonders bevorzugt 1 Kohlenstoffatom, steht, A für eine Alkylengruppe, vorzugsweise eine Alkylengruppe mit einer Anzahl von 2 bis 20 Kohlenstoffatomen, steht, Ethylen vorzugsweise mehr als 70 mol-% von A ausmacht, Ethylen weiter bevorzugt mehr als 80 mol-% von A ausmacht, Ethylen weiter bevorzugt mehr als 90 mol-% von A ausmacht und Ethylen ganz besonders bevorzugt 100 mol-% von A ausmacht, n in der Formel (VIa) für eine ganze Zahl von 2 bis 200, vorzugsweise 10 bis 150, weiter bevorzugt 20 bis 100, weiter bevorzugt 20 bis 75, weiter bevorzugt 20 bis 30 und ganz besonders bevorzugt 20 bis 25 steht,
M^{a} und M^{b} in der Formel (VIa) gleich oder voneinander verschieden sind und unabhängig voneinander jeweils für Wasserstoff oder für ein Kationenäquivalent stehen,
mit einem Diethanolamindiphosphat umgesetzt wird.

12. Verfahren P2 nach Anspruch 9 zur Herstellung des Dispergiermittels gemäß der folgenden allgemeinen Formel (VII),
(VII) R³-O-(AO)ₙ-(CH₂)₂-S(=O)_{y}-(CH₂)₂-N-[(CH₂)₂-O-CH₂-CH(OPO₃M^{a}M^{b})-CH₂-OPO₃M^{a}M^{b}]₂,
wobei die folgenden Verfahrensschritte durchgeführt werden:
P2-1) ein Sulfoxid oder ein Sulfon der allgemeinen Formel (VIII) wird mit einem Diethanolamin zu einem Alkohol der folgenden allgemeinen Formel (XII) umgesetzt,
(XII) R³-O-(AO)ₙ-(CH₂)₂-S(=O)_{y}-(CH₂)₂-N-[(CH₂)₂-OH]₂,
P2-2) der erhaltene Alkohol gemäß der allgemeinen Formel (XII) wird mit 2,3-Epoxy-1-propanol(glycidol) zu einer Struktur der folgenden allgemeinen Formel (XIII) umgesetzt,
(XIII) R³-O-(AO)ₙ-(CH₂)₂-S(=O)_{y}-(CH₂)₂-N-[(CH₂)₂-O-CH₂-CH(OH)-CH₂-OH]₂,
P2-3) der aus Schritt P2-2) erhaltene Alkohol wird phosphoryliert, wobei
y 1 oder 2 ist,
A für eine Alkylengruppe, vorzugsweise eine Alkylengruppe mit einer Anzahl von 2 bis 20 Kohlenstoffatomen, steht, Ethylen vorzugsweise mehr als 70 mol-% von A ausmacht, Ethylen weiter bevorzugt mehr als 80 mol-% von A ausmacht, Ethylen noch weiter bevorzugt mehr als 90 mol-% von A ausmacht und Ethylen ganz besonders bevorzugt 100 mol-% von A ausmacht, n für eine ganze Zahl von 2 bis 200, vorzugsweise 10 bis 150, weiter bevorzugt 20 bis 100, weiter bevorzugt 20 bis 75, weiter bevorzugt 20 bis 30 und ganz besonders bevorzugt 20 bis 25 steht, M^{a} und M^{b} gleich oder voneinander verschieden sind und unabhängig voneinander jeweils für Wasserstoff oder für ein Kationenäquivalent stehen,
R³ für H, -CH₂-CH(OPO₃M^{a}M^{b})-CH₂-OPO₃M^{a}M^{b} oder einen (hetero)aromatischen oder aliphatischen Kohlenwasserstoff, gegebenenfalls für einen substituierten (hetero)aromatischen oder substituierten aliphatischen Kohlenwasserstoff, vorzugsweise einen gesättigten Kohlenwasserstoff mit einer Anzahl von 1 bis 30 Kohlenstoffatomen, vorzugsweise einer Anzahl von 1 bis 10 Kohlenstoffatomen, ganz besonders bevorzugt 1 Kohlenstoffatom, steht.

13. Baustoffmischung, enthaltend das Dispergiermittel gemäß einem der Ansprüche 1 bis 8 und anorganische Bindemittel, die aus der Gruppe Zement, Calciumsulfat-Semihydrat, Anhydrit, Schlacke, vorzugsweise Hüttensandmehl, Flugasche, Mikrosilica, Metakaolin, natürliche Puzzolane, gebrannter Ölschiefer, Calciumaluminatzement oder Calciumsulfoaluminatzement ausgewählt sind, wobei die Baustoffmischungen einen oder mehrere der Bindemittel umfassen.

14. Verwendung der Dispergiermittel gemäß einem der Ansprüche 1 bis 8 als Dispergiermittel für anorganische Bindemittel, die aus der Gruppe Zement, Calciumsulfat-Semihydrat, Anhydrit, Schlacke, vorzugsweise Hüttensandmehl, Flugasche, Mikrosilica, Metakaolin, natürliche Puzzolane, gebrannter Ölschiefer, Calciumaluminatzement oder Calciumsulfoaluminatzement ausgewählt sind, wobei eines oder mehrere der Bindemittel vorliegen.

## Revendications

1. Dispersant pour particules organiques, le dispersant étant un sulfoxyde selon la formule générale (Iₛₒₓ) contenant au moins un radical sulfinyle (S=O)
**(Iₛₒₓ)** **X-(S=O)-Y**
ou le dispersant étant une sulfone selon la formule générale (Iₛₒₙ) contenant au moins un radical sulfonyle (S(=O)₂)
**(Iₛₒₙ)** **X-(S=O)₂-Y,**
X dans la formule (Iₛₒₓ) ou (Iₛₒₙ) étant un motif structural comprenant au moins un polyalkylèneglycol et
Y dans la formule (Iₛₒₓ) ou (Iₛₒₙ) étant un motif structural comprenant une amine secondaire ou une amine tertiaire et au moins un radical contenant du phosphore de formule générale (II)
**(II)** **-OPO₃M^{a}M^{b},**
M^{a} et M^{b} étant identiques ou différents et étant indépendamment l'un de l'autre hydrogène ou un équivalent cation.

2. Dispersant selon la revendication 1,
X étant un radical de formule générale (III)
**(III)** **PAG-(CH₂)₂-**
PAG étant un motif structural comprenant au moins un polyalkylèneglycol et
Y étant un radical de formule générale (IV)
**(IV)** **-(CH₂)₂-NR¹R²**
au moins un parmi les radicaux R¹ et R² comprenant au moins un radical contenant du phosphore de formule générale (II)
**(II)** **-OPO₃M^{a}M^{b},**
M^{a} et M^{b} étant identiques ou différents et étant indépendamment l'un de l'autre hydrogène ou un équivalent cation.

3. Dispersant selon la revendication 2, PAG étant selon la formule générale (V)
**(V)** **R³-O-(AO)ₙ-**
R³ étant H, **-CH₂-CH(OPO₃M^{a}M^{b})-CH₂-OPO₃M^{a}M^{b}** ou un hydrocarbure (hétéro)aromatique ou aliphatique, préférablement R³ étant un hydrocarbure (hétéro)aromatique ou aliphatique, éventuellement un hydrocarbure (hétéro)aromatique substitué ou aliphatique substitué, préférablement un hydrocarbure saturé doté d'un nombre d'atomes de carbone de 1 à 30, préférablement 1 à 10 atome(s) de carbone, le plus préférablement 1 à 4 atome (s) de carbone,
A étant un groupe alkylène, préférablement un groupe alkylène doté d'un nombre d'atomes de carbone de 2 à 20, préférablement plus de 70 % en moles de A étant éthylène, plus préférablement plus de 80 % en moles de A étant éthylène, plus préférablement plus de 90 % en moles de A étant éthylène et le plus préférablement 100 % en moles de A étant éthylène,
n étant un entier de 2 à 200, préférablement 10 à 150, plus préférablement 20 à 100, plus préférablement 20 à 75, plus préférablement 20 à 30 et le plus préférablement 20 à 25,
M^{a} et M^{b} étant identiques ou différents et étant indépendamment l'un de l'autre hydrogène ou un équivalent cation.

4. Dispersant selon l'une quelconque des revendications 1 à 3, au moins deux radicaux contenant du phosphore de formule générale (II) étant présents
**(II)** **-OPO₃M^{a}M^{b}**
M^{a} et M^{b} étant identiques ou différents et étant indépendamment l'un de l'autre hydrogène ou un équivalent cation, plus préférablement deux radicaux contenant du phosphore de formule générale (II) étant présents.

5. Dispersant selon l'une quelconque des revendications 1 à 4, Y dans la formule (Iₛₒₓ) ou (Iₛₒₙ) étant un motif structural comprenant une amine tertiaire et comprenant au moins 2 radicaux contenant du phosphore selon la formule générale (II), préférablement l'amine tertiaire comprenant 3 ou 4 radicaux contenant du phosphore selon la formule générale (II).

6. Dispersant selon l'une quelconque des revendications 1 à 3, le dispersant correspondant à une des formules générales (VIa), (VIb) ou (VIc),
**(VIa)** **R³-O-(AO)ₙ-(CH₂)₂-S(=O)_{y}(CH₂)₂-N-[-(CH₂)₂-OPO₃M^{a}M^{b}]₂,**
**(VIb)** **R³-O-(AO)ₙ-(CH₂)₂-S(=O)_{y}-(CH₂)₂-NH-(CH₂)₂-OPO₃M^{a}M^{b},**
**(VIc)** **[R³-O-(AO)ₙ-(CH₂)₂-S(=O)_{y}-(CH₂)₂]₂N-(CH₂)₂-OPO₃M³M^{b}**
R³ étant, dans les formules (VIa), (VIb) et (VIc), H ou un hydrocarbure (hétéro)aromatique ou aliphatique, éventuellement un hydrocarbure (hétéro)aromatique substitué ou aliphatique substitué, préférablement un hydrocarbure saturé doté d'un nombre d'atomes de carbone de 1 à 30, préférablement doté d'un nombre d'atomes de carbone de 1 à 10, le plus préférablement 1 atome de carbone, A étant un groupe alkylène, préférablement un groupe alkylène doté d'un nombre d'atomes de carbone de 2 à 20, préférablement plus de 70 % en moles de A étant éthylène, plus préférablement plus de 80 % en moles de A étant éthylène, plus préférablement plus de 90 % en moles de A étant éthylène et le plus préférablement 100 % en moles de A étant éthylène, y étant, dans les formules (VIa), (VIb) et (VIc), 1 ou 2,
n étant, dans les formules (VIa), (VIb) et (VIc), un entier de 2 à 200, préférablement 10 à 150, plus préférablement 20 à 100, plus préférablement 20 à 75, plus préférablement 20 à 30 et le plus préférablement 20 à 25,
M^{a} et M^{b}, dans les formules (VIa), (VIb) et (VIc), étant identiques ou différents et étant indépendamment l'un de l'autre hydrogène ou un équivalent cation.

7. Dispersant selon l'une quelconque des revendications 1 à 5, le dispersant étant selon la formule générale (VII)
**(VII)** **R³-O-(AO)ₙ-(CH₂)₂-S(=O)_{y}-(CH₂)₂-N-[(CH₂)₂-O-CH₂-CH(OPO₃M^{a}-M^{b})-CH₂**-**OPO₃M^{a}M^{b}]₂**
R³, dans la formule (VII), étant H, **-CH₂-CH(OPO₃M^{a}M^{b})-CH₂-OPO₃M^{a}M^{b}** ou un hydrocarbure (hétéro)aromatique ou aliphatique, éventuellement un hydrocarbure (hétéro)aromatique substitué ou aliphatique substitué, préférablement un hydrocarbure saturé doté d'un nombre d'atomes de carbone de 1 à 30, préférablement doté d'un nombre d'atomes de carbone 1 à 10, le plus préférablement 1 atome de carbone, A étant un groupe alkylène, préférablement un groupe alkylène doté d'un nombre d'atomes de carbone de 2 à 20, préférablement plus de 70 % en moles de A étant éthylène, plus préférablement plus de 80 % en moles de A étant éthylène, plus préférablement plus de 90 % en moles de A étant éthylène et le plus préférablement 100 % en moles de A étant éthylène, y étant 1 ou 2, n étant un entier de 2 à 200, préférablement 10 à 150, plus préférablement 20 à 100, plus préférablement 20 à 75, plus préférablement 20 à 30 et le plus préférablement 20 à 25, M^{a} et M^{b} dans la formule (VII) étant identiques ou différents et étant indépendamment l'un de l'autre hydrogène ou un équivalent cation.

8. Dispersant selon la revendication 3, ou selon la revendication 6 ou 7, n, dans la formule R³-O-(AO)ₙ étant un entier de 10 à 200, plus préférablement 20 à 150.

9. Procédé pour la production du dispersant selon l'une quelconque des revendications 1 à 8, où dans un procédé (P1) les étapes de procédé suivantes sont réalisées :
P1-1) un sulfoxyde ou une sulfone de formule générale (VIII)
(VIII) X-S(=O)_{y}-CH=CH₂
X étant un motif structural comprenant au moins un polyalkylèneglycol, X étant préférablement R³-O-(AO)ₙ-CH₂-CH₂-,
R³ étant H, -CH₂-CH(OPO₃M^{a}M^{b})-CH₂-OPO₃ M^{a} M^{b} ou un hydrocarbure (hétéro)aromatique ou aliphatique, éventuellement un hydrocarbure (hétéro)aromatique substitué ou aliphatique substitué, préférablement un hydrocarbure saturé doté d'un nombre d'atomes de carbone de 1 à 30, préférablement doté d'un nombre d'atomes de carbone de 1 à 10, le plus préférablement 1 atome de carbone,
A étant un groupe alkylène, préférablement un groupe alkylène doté d'un nombre d'atomes de carbone de 2 à 20, préférablement plus de 70 % en moles de A étant éthylène, plus préférablement plus de 80 % en moles de A étant éthylène, plus préférablement plus de 90 % en moles de A étant éthylène et le plus préférablement 100 % en moles de A étant éthylène, n étant un entier de 2 à 200, préférablement 10 à 150, plus préférablement 20 à 100, plus préférablement 20 à 75, plus préférablement 20 à 30 et le plus préférablement 20 à 25, M^{a} et M^{b} étant identiques ou différents et étant indépendamment l'un de l'autre hydrogène ou un équivalent cation,
y étant 1 ou 2,
est mis(e) à réagir avec une alcanolamine primaire phosphorylée et/ou une alcanolamine secondaire phosphorylée, ou, dans un procédé alternatif (P2), les étapes de procédé suivantes sont réalisées :
P2-1) un sulfoxyde ou une sulfone de formule générale (VIII) mentionnée précédemment est mis(e) à réagir avec une alcanolamine primaire et/ou une alcanolamine secondaire en un alcool de structure générale suivante (X)
(X) X-S(=O)_{y}-(CH₂)₂-NR*¹R*²,
y étant 1 ou 2,
X étant un motif structural comprenant au moins un polyalkylèneglycol, X étant préférablement R³-O-(AO)ₙ-CH₂-CH₂-,
R³ étant H, -CH₂-CH(OPO₃M^{a}M^{b})-CH₂-OPO₃ M^{a} M^{b} ou un hydrocarbure (hétéro)aromatique ou aliphatique, éventuellement un hydrocarbure (hétéro)aromatique substitué ou aliphatique substitué, préférablement un hydrocarbure saturé doté d'un nombre d'atomes de carbone de 1 à 30, préférablement doté d'un nombre d'atomes de carbone de 1 à 10, le plus préférablement 1 atome de carbone,
A étant un groupe alkylène, préférablement un groupe alkylène doté d'un nombre d'atomes de carbone de 2 à 20, préférablement plus de 70 % en moles de A étant éthylène, plus préférablement plus de 80 % en moles de A étant éthylène, plus préférablement plus de 90 % en moles de A étant éthylène et le plus préférablement 100 % en moles de A étant éthylène, n étant un entier de 2 à 200, préférablement 10 à 150, plus préférablement 20 à 100, plus préférablement 20 à 75, plus préférablement 20 à 30 et le plus préférablement 20 à 25, M^{a} et M^{b} étant identiques ou différents et étant indépendamment l'un de l'autre hydrogène ou un équivalent cation,
au moins l'un des radicaux R*¹ et R*² comprenant au moins un groupe OH (groupe hydroxy), préférablement au moins l'un des radicaux R*¹ et R*² étant choisi dans le groupe de -(CH₂)₂-OH,-(CH₂)₂-(OA³)ₘ-OH, H, hydrocarbure (hétéro)aromatique ou hydrocarbure aliphatique, plus préférablement au moins l'un des radicaux R*¹ et R*² étant -(CH₂)₂-OH,
A³ étant un groupe alkylène, préférablement un groupe alkylène doté d'un nombre d'atomes de carbone de 2 à 20, préférablement plus de 70 % en moles de A³ étant éthylène, m étant un entier de 1 à 50, préférablement 1 à 20, le plus préférablement 1 à 5,
P2-2) éventuellement l'alcool obtenu selon la formule générale (X) est mis à réagir avec du 2,3-époxy-1-propanol (glycidol) en un alcool de formule générale suivante (XI)
(XI) X-S(=O)_{y}-(CH₂)₂-NR**¹R**²
y étant 1 ou 2,
X étant un motif structural comprenant au moins un polyalkylèneglycol, X étant préférablement R³-O-(AO)ₙ-CH₂-CH₂-,
R³ étant -CH₂-CH(OH)-CH₂-OH, -CH2-CH(OPO₃ M^{a} M^{b})-CH₂-OPO₃ M^{a} M^{b} ou un hydrocarbure (hétéro)aromatique ou aliphatique, éventuellement un hydrocarbure (hétéro)aromatique substitué ou aliphatique substitué, préférablement un hydrocarbure saturé doté d'un nombre d'atomes de carbone de 1 à 30, préférablement doté d'un nombre d'atomes de carbone 1 à 10, le plus préférablement 1 atome de carbone,
A étant un groupe alkylène, préférablement un groupe alkylène doté d'un nombre d'atomes de carbone de 2 à 20, préférablement plus de 70 % en moles de A étant éthylène, plus préférablement plus de 80 % en moles de A étant éthylène, plus préférablement plus de 90 % en moles de A étant éthylène et le plus préférablement 100 % en moles de A étant éthylène, n étant un entier de 2 à 200, préférablement 10 à 150, plus préférablement 20 à 100, plus préférablement 20 à 75, plus préférablement 20 à 30 et le plus préférablement 20 à 25, M^{a} et M^{b} étant identiques ou différents et étant indépendamment l'un de l'autre hydrogène ou un équivalent cation,
au moins l'un des radicaux R**¹ et R**² comprenant au moins un -OCH₂-CH(OH)-CH₂-OH, préférablement au moins l'un des radicaux R**¹ et R**² étant choisi dans le groupe de - (CH₂)₂-OCH₂-CH(OH)-CH₂-OH, - (CH₂)₂-(OA³)ₘ-OCH₂-CH(OH)-CH₂-OH, -(CH₂)₂-OH, - (CH₂)₂-(OA³)ₘ-OH, H, hydrocarbure (hétéro) aromatique ou hydrocarbure aliphatique, plus préférablement au moins l'un des radicaux R**¹ et R**² étant-(CH₂)₂-O-CH₂-CH(OH)-CH₂-OH, le plus préférablement les deux R**¹ et R**² étant - (CH₂)₂-O-CH₂-CH(OH)-CH₂-OH,
A³ étant un groupe alkylène, préférablement un groupe alkylène doté d'un nombre d'atomes de carbone de 2 à 20, préférablement plus de 70 % en moles de A³ étant éthylène, m étant un entier de 1 à 50, préférablement 1 à 20, le plus préférablement 1 à 5,
P2-3) l'alcool obtenu de l'étape P2-1) selon la formule générale (X) ou l'alcool obtenu de l'étape éventuelle P2-2) selon la formule générale (XI) est phosphorylé.

10. Procédé selon la revendication 9 pour la production du dispersant selon l'une quelconque des revendications 1 à 8, où dans le procédé P1 l'alcanolamine primaire phosphorylée et/ou l'alcanolamine secondaire phosphorylée est choisie dans le groupe du phosphate d'éthanolamine, du diphosphate de diéthanolamine, du monophosphate de diéthanolamine ou de mélanges desdites alcanolamines phosphorylées ou
dans le procédé P2
l'alcanolamine primaire phosphorylée et/ou l'alcanolamine secondaire phosphorylée est choisie parmi l'éthanolamine et/ou la diéthanolamine.

11. Procédé P1 selon la revendication 9 ou la revendication 10 pour la production du dispersant conformément à la revendication 6, de formule générale (VIa),
(VIa) R³-O-(AO)ₙ-(CH₂)₂-S(=O)_{y}-(CH₂)₂-N-[-(CH₂)₂-OPO₃ M^{a} M^{b}]₂,
où un sulfoxyde ou une sulfone de formule générale (VIII)
(VIII) X-S(=O)_{y}-CH=CH₂
X dans la formule (VIII) étant R³-O-(AO)n-(CH₂)₂-, y étant, dans les formules (VIa) et (VIII), 1 ou 2, R³ dans la formule (VIa) étant H ou un hydrocarbure (hétéro)aromatique ou aliphatique, éventuellement un hydrocarbure (hétéro)aromatique substitué ou aliphatique substitué, préférablement un hydrocarbure saturé doté d'un nombre d'atomes de carbone de 1 à 30, préférablement doté d'un nombre d'atomes de carbone de 1 à 10, le plus préférablement 1 atome de carbone, A étant un groupe alkylène, préférablement un groupe alkylène doté d'un nombre d'atomes de carbone de 2 à 20, préférablement plus de 70 % en moles de A étant éthylène, plus préférablement plus de 80 % en moles de A étant éthylène, plus préférablement plus de 90 % en moles de A étant éthylène et le plus préférablement 100 % en moles de A étant éthylène, n étant dans la formule (VIa) un entier de 2 à 200, préférablement 10 à 150, plus préférablement 20 à 100, plus préférablement 20 à 75, plus préférablement 20 à 30 et le plus préférablement 20 à 25,
M^{a} et M^{b}, dans la formule (VIa), étant identiques ou différents et étant indépendamment l'un de l'autre hydrogène ou un équivalent cation,
est mis(e) à réagir avec du diphosphate de diéthanolamine.

12. Procédé P2 selon la revendication 9 pour la production du dispersant selon la formule générale (VII),
(VII) R³-O-(AO)ₙ-(CH₂)₂-S(=O)_{y}-(CH₂)₂-N-[(CH₂)₂-O-CH₂-CH(OPO₃ M^{a} M^{b})-CH₂-OPO₃ M^{a} M^{b}]₂,
où les étapes de procédé suivantes sont réalisées
P2-1) un sulfoxyde ou une sulfone de formule générale (VIII) est mis(e) à réagir avec de la diéthanolamine en un alcool de structure générale suivante (XII)
(XII) R³-O-(AO)ₙ-(CH₂)₂-S(=O)_{y}-(CH₂)₂-N-[(CH₂)₂-OH]₂,
P2-2) l'alcool obtenu selon la formule générale (XII) est mis à réagir avec du 2,3-époxy-1-propanol (glycidol) en une structure de formule générale suivante (XIII)
(XIII) R³-O-(AO)ₙ-(CH₂)₂-S(=O)_{y}-(CH₂)₂-N-[(CH₂)₂-O-CH₂-CH(OH)-CH₂-OH]₂,
P2-3) l'alcool obtenu de l'étape P2-2) est phosphorylé,
y étant 1 ou 2,
A étant un groupe alkylène, préférablement un groupe alkylène doté d'un nombre d'atomes de carbone de 2 à 20, préférablement plus de 70 % en moles de A étant éthylène, plus préférablement plus de 80 % en moles de A étant éthylène, plus préférablement plus de 90 % en moles de A étant éthylène et le plus préférablement 100 % en moles de A étant éthylène, n étant un entier de 2 à 200, préférablement 10 à 150, plus préférablement 20 à 100, plus préférablement 20 à 75, plus préférablement 20 à 30 et le plus préférablement 20 à 25,
M^{a} et M^{b} étant identiques ou différents et étant indépendamment l'un de l'autre hydrogène ou un équivalent cation,
R³ étant H, -CH₂-CH(OPO₃ M^{a} M^{b})-CH₂-OPO₃ M^{a} M^{b} ou un hydrocarbure (hétéro)aromatique ou aliphatique, éventuellement un hydrocarbure (hétéro)aromatique substitué ou aliphatique substitué, préférablement un hydrocarbure saturé doté d'un nombre d'atomes de carbone de 1 à 30, préférablement doté d'un nombre d'atomes de carbone de 1 à 10, le plus préférablement 1 atome de carbone.

13. Mélange de matériaux de construction, comprenant le dispersant selon l'une quelconque des revendications 1 à 8 et des liants inorganiques choisis dans le groupe du ciment, de l'hémihydrate de sulfate de calcium, de l'anhydrite, du laitier, préférablement du laitier de hauts fourneaux granulé broyé, des cendres volantes, de la fumée de silice, du métakaolin, de la pouzzolane naturelle, du schiste bitumineux calciné, du ciment calcium aluminate ou du ciment calcium sulfoaluminate, un ou plus d'un des liants étant compris dans les mélanges de construction.

14. Utilisation des dispersants selon l'une quelconque des revendications 1 à 8 en tant que dispersant pour des liants inorganiques choisis dans le groupe du ciment, de l'hémihydrate de sulfate de calcium, de l'anhydrite, du laitier, préférablement du laitier de hauts fourneaux granulé broyé, des cendres volantes, de la fumée de silice, du métakaolin, de la pouzzolane naturelle, du schiste bitumineux calciné, du ciment calcium aluminate ou du ciment calcium sulfoaluminate, un ou plus d'un des liants étant présents.
